(19) Europäisches Patentamt
European Patent Office
Office européen des brevets

(11) **EP 4 043 516 A1**

(12) **EUROPEAN PATENT APPLICATION**
published in accordance with Art. 153(4) EPC

(43) Date of publication:
**17.08.2022   Bulletin 2022/33**

(21) Application number: **20874698.2**

(22) Date of filing: **08.10.2020**

(51) International Patent Classification (IPC):
***C08J 9/26*** *(2006.01)*

(52) Cooperative Patent Classification (CPC):
**C08J 9/26**

(86) International application number:
**PCT/JP2020/038210**

(87) International publication number:
**WO 2021/070917 (15.04.2021 Gazette 2021/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **08.10.2019   JP 2019185470**

(71) Applicant: **Asahi Kasei Kabushiki Kaisha Tokyo 1000006 (JP)**

(72) Inventors:
• **KAWACHI, Mana**
  **Tokyo 100-0006 (JP)**

• **MIYAZAWA, Hiroshi**
  **Tokyo 100-0006 (JP)**
• **SEKIGUCHI, Manabu**
  **Tokyo 100-0006 (JP)**
• **HISAMITSU, Shinya**
  **Tokyo 100-0006 (JP)**
• **ODA, Yoshiki**
  **Tokyo 100-0006 (JP)**

(74) Representative: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **POLYOLEFIN MICROPOROUS MEMBRANE**

(57)     Provided is a polyolefin microporous membrane in which the membrane thickness is 1.0-17.0 $\mu$m inclusive, the flexural modulus, which is the value of the flexural rigidity (gf $\times$ cm$^2$/cm) in the longitudinal direction (MD) divided by the cube of the membrane thickness ($\mu$m), is 0.3 ($\mu$gf $\times$ cm$^2$/cm)/$\mu$m$^3$ to 1.5 ($\mu$gf $\times$ cm$^2$/cm)/$\mu$m$^3$ inclusive, and the basis weight-converted puncture strength is 70 gf/(g/m$^2$) to 160 gf/(g/m$^2$) inclusive.

FIG. 1

CONNECTED TO TORQUE METER

**Description**

FIELD

The present invention relates to a polyolefin microporous membrane.

BACKGROUND

Polyolefin microporous membranes exhibit excellent electrical insulating properties and ion permeability, and are thus used in separators for cells, separators for capacitors, materials for fuel cells, and microfiltration membranes. Particularly, polyolefin microporous membranes are used as separators for lithium-ion secondary cells.

In recent years, lithium-ion secondary cells are used in both small electronic devices, such as mobile phones and laptop computers, and electric vehicles, such as electric cars and small electric motorcycles. The separators for lithium-ion secondary cells are required not only to have mechanical properties and ion permeability, but also high safety against impact testing and moderately low rigidity in the production process of prismatic cells. Recently, regarding the production method, the control of physical properties by strain rate during stretching has been investigated, and eliminating the trade-off of physical properties, which has been difficult to achieve until now, by controlling the strain rate has become possible (PTL 2 to 5).

PTL 1 proposes a method for producing a polyolefin microporous membrane having small spring-back, and teaches that the internal stress of the entire membrane and spring-back can be reduced by carrying out a relaxation operation after primary stretching. However, PTL 1 does not consider the impact safety of cells. Thus, improvements can be made regarding impact safety.

PTL 2 describes the development of a membrane, wherein the membrane has specific ratios of thermal shrinkage rates at 120 °C and of thermal shrinkage rates at 130 °C in order to prevent thermal runaway of a cell, maintains the dimensions thereof at 120 °C, and can inhibit thermal runaway of the cell by melting and shutting down at 130 °C. As a production method thereof, PTL 2 teaches that the ratio of the strain rate in the MD to that in the TD during biaxial stretching or sequential stretching is 1.2 to 1.8, stretching-strain rate in the heat setting step is 20%/sec or greater, and the relaxation rate is 10%/sec or less. However, the membrane described in PTL 2 tends to sacrifice strength to control thermal shrinkage. Thus, improvements can be made from the viewpoint of impact safety of the cell.

PTL 3 proposes a polyolefin microporous membrane which has a low puncture elongation and a low TMA stress, and teaches that thermal runaway of a cell can be inhibited by controlling the puncture elongation and stress within specific ranges. As a production method thereof, PTL 3 teaches that the ratio of the strain rate in the TD in the primary stretching step to that in the heat setting step is set to 2.0 to 10.0, and the strain rate in the MD during simultaneous biaxial stretching is set to 20%/sec to 50%/sec. However, PTL 3 does not consider the relaxation strain rate in the heat setting step. Thus, improvements can be made regarding the flexural rigidity of the membrane and the increase of puncture strength.

PTL 4 considers that when stretching a gel-like sheet, the strain rate is preferably set to 3%/sec or greater to make the pore structure uniformly dense and to achieve both shutdown characteristic and thermal resistance. However, PTL 4 neither describes the strain rate of the relaxation process in the heat setting step nor mentions the flexural rigidity of the polyolefin microporous membrane.

PTL 5 describes that by keeping the compositions of a surface layer and an intermediate layer in a laminated film within specific ranges, the thermal shrinkage rate at 120 °C in TMA measurement is kept within 10% to 40%, thereby inhibiting distortion of the cell upon thermal pressing and deterioration of cycling characteristics. However, PTL 5 has a membrane design which limits the strength in order to inhibit the thermal shrinkage rate. Thus, improvements can be made regarding the safety of the cell.

[CITATION LIST]

[PATENT LITERATURE]

[PTL 1] Japanese Unexamined Patent Publication (Kokai) No. 2016-191006
[PTL 2] WO 2018/179810
[PTL 3] WO 2019/045077
[PTL 4] Japanese Unexamined Patent Publication (Kokai) No. 2015-208893
[PTL 5] WO 2019/074122

SUMMARY

[TECHNICAL PROBLEM]

Lithium-ion secondary cells have evolved into various shapes, such as cylindrical, prismatic, and pouch type, in accordance with the application. The method of producing a cell varies depending on the shape of the cell. In the production of a prismatic cell, there is a step wherein a roll or stack of electrodes and a polyolefin membrane is pressed and inserted into an exterior can.

It is known that the roll rebounds and springs back immediately after the press pressure is released, due to the rigidity of the polyolefin microporous membrane. As a result, the thickness of the roll is greater than the thickness of the exterior can. Thus, when using a highly rigid polyolefin microporous membrane, it is necessary to limit the number of winding of the roll in consideration of the amount of spring-back. Limiting the number of winding of the roll leads to a decrease in energy density since the use amount of electrode is decreased. Therefore, development has been made to increase the number of winding of the roll as much as possible.

In the stack, the zigzag folding pattern has been increasingly adopted in recent years from the viewpoint of improving energy density. In a zigzag folding pattern, the positive electrode and the negative electrode are inserted alternately while the separator is folded over so that the upper and lower surfaces thereof alternate. In the zigzag folding pattern, since two contiguous portions are bent in opposite directions, when the press pressure is released, the bent portions spring back in an attempt to return to the original shape, due to the rigidity of the polyolefin microporous membrane. Therefore, similar to the roll, it is necessary to limit the number of layers in consideration of the amount of spring-back. Thus, there is an issue of a decrease in energy density.

When a cell having high energy density, for example, receives an external impact, the membrane ruptures and short circuit occurs. Consequently, the cell easily undergoes thermal runaway, and safety tends to decrease.

Conventionally, in order to reduce the rigidity of a polyolefin microporous membrane, there are methods such as decreasing the membrane thickness of the polyolefin microporous membrane or decreasing the strength. However, both cases tend to decrease the impact safety of a cell. Thus, both low rigidity of the polyolefin microporous membrane and impact safety of the cell could not be achieved so far.

In view of the above circumstances, an object of the present invention is to provide a polyolefin microporous membrane for lithium-ion secondary cells which realizes high energy densification of a prismatic cell, and can ensure impact safety while having high energy density.

[SOLUTION TO PROBLEM]

The present inventors have discovered that the above object can be achieved by specifying the flexural rigidity of a polyolefin microporous membrane and the basis weight-equivalent puncture strength thereof, thus completing the present invention. The present invention is described as follows:

[1] A polyolefin microporous membrane having a membrane thickness of 1.0 $\mu$m to 17.0 $\mu$m; a flexural modulus, which is a value obtained by dividing a flexural rigidity (gf $\times$ cm$^2$/cm) in a longitudinal direction (MD) by the cube of the membrane thickness ($\mu$m), of 0.3 ($\mu$gf $\times$ cm$^2$/cm)/$\mu$m$^3$ to 1.5 ($\mu$gf $\times$ cm$^2$/cm)/$\mu$m$^3$; and a basis weight-equivalent puncture strength of 70 gf/(g/m$^2$) to 160 gf/(g/m$^2$).

[2] The polyolefin microporous membrane according to item 1, wherein the basis weight-equivalent puncture strength is 80 gf/(g/m$^2$) to 140 gf/(g/m$^2$).

[3] The polyolefin microporous membrane according to item 1 or 2, which has a puncture strength of 300 gf to 950 gf.

[4] The polyolefin microporous membrane according to any one of items 1 to 3, which has a tensile strength of 1000 kgf/cm$^2$ or greater in each of the MD and the TD.

[5] The polyolefin microporous membrane according to any one of items 1 to 4, wherein a ratio (MD/TD tensile strength ratio) of the tensile strength in the MD to the tensile strength in the TD is 0.80 to 1.20.

[6] The polyolefin microporous membrane according to any one of items 1 to 5, which has a shutdown temperature of 125 °C to 150 °C.

[7] The polyolefin microporous membrane according to any one of items 1 to 6, which has an air permeability of 30 sec/100 cm$^3$ to 250 sec/100 cm$^3$.

[8] The polyolefin microporous membrane according to any one of items 1 to 7, which has a withstand voltage per unit membrane thickness of 0.130 kV/$\mu$m or greater.

[9] The polyolefin microporous membrane according to any one of items 1 to 8, which has an average pore size of 0.010 $\mu$m to 0.080 $\mu$m.

[10] The polyolefin microporous membrane according to any one of items 1 to 9, wherein a proportion of polyethylene is 50% by weight to 100% by weight and a proportion of polypropylene is 0% by weight to 20% by weight.

[ADVANTAGEOUS EFFECTS OF INVENTION]

According to the present invention, high energy densification of a lithium-ion secondary cell and impact safety of the cell can both be achieved.

According to the present invention, spring-back during the insertion of a roll or a stack into an exterior can in a production step of a prismatic cell is inhibited by controlling the flexural rigidity of a polyolefin microporous membrane to low rigidity, and thus the number of winding or the number of staking layers can be increased. Therefore, it is possible to increase the energy density of the prismatic cell.

According to the present invention, since a polyolefin microporous membrane having high basis weight-equivalent puncture strength can be obtained, the impact safety of the cell can be improved as well.

Conventionally, methods of reducing the rigidity of a polyolefin microporous membrane included decreasing the membrane thickness and decreasing the puncture strength, both of which tended to decrease the impact safety of a cell. However, the polyolefin microporous membrane of the present invention is able to achieve both low rigidity and impact safety.

BRIEF DESCRIPTION OF DRAWINGS

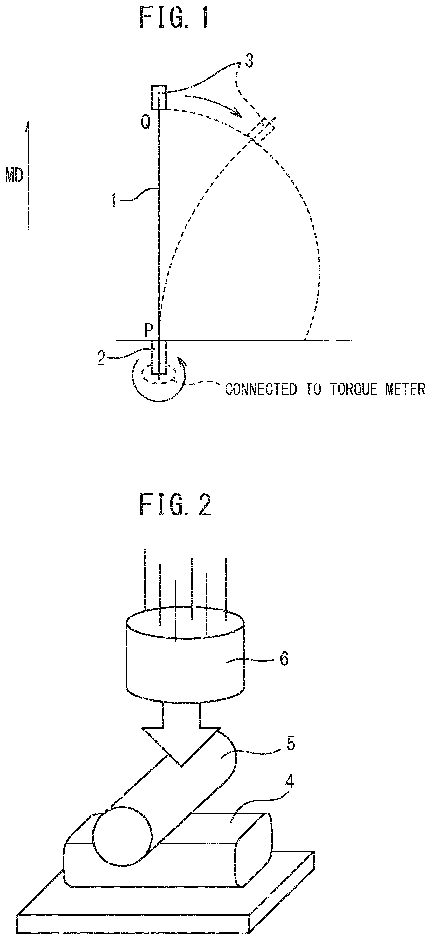

FIG. 1 is a schematic diagram describing the measuring mechanism of a pure bending test, where a point P is fixed, a point Q is movable, and flexural rigidity is measured by moving the point Q along the curved line in FIG. 1 during the test. The MD shown in FIG. 1 is the direction in which a sample is set when measuring the flexural rigidity in the MD. FIG. 2 is a schematic diagram of an impact test.

DESCRIPTION OF EMBODIMENTS

Hereinafter, embodiments for carrying out the present invention (hereinafter, shortened as "the embodiments") will be described in detail. The present invention is not limited by the embodiments below, and various modifications can be made without departing from the scope of the present invention.

Herein, the longitudinal direction (MD) means the machine direction of a continuous molding of the microporous membrane, and the width direction (TD) means the transverse direction at an angle of 90° from the MD of the microporous membrane.

<Polyolefin microporous membrane>

One embodiment of the present invention is a polyolefin microporous membrane. The polyolefin microporous membrane used in a prismatic cell preferably has low flexural rigidity, in consideration of spring-back during the winding of the electrodes and separator. Since the polyolefin microporous membrane can be used as a separator for secondary cells, it is preferable that puncture strength be high from the viewpoint of impact safety of the cell.

The polyolefin microporous membrane according to the embodiment of the present invention has a flexural modulus of 0.3 ($\mu$gf $\times$ cm$^2$/cm)/$\mu$m$^3$ to 1.5 ($\mu$gf $\times$ cm$^2$/cm)/$\mu$m$^3$. The flexural modulus is a value obtained by dividing the flexural rigidity [gf $\times$ cm$^2$/cm] in the longitudinal direction (MD), measured with a pure bending tester, by the cube of the membrane thickness [$\mu$m]. When the flexural modulus is less than 0.3 ($\mu$gf $\times$ cm$^2$ /cm)/$\mu$m$^3$, the rigidity of the polyolefin microporous membrane becomes too low. Since wrinkles form when the electrodes and separator are wound and stacked, 0.3 ($\mu$gf $\times$ cm$^2$/cm)/$\mu$m$^3$ or greater is preferable. Further, by limiting the flexural modulus to 1.5 ($\mu$gf $\times$ cm$^2$/cm)/$\mu$m$^3$ or less, the spring-back in a roll after pressing and the spring-back of the folded portion in a stack having a zigzag folding pattern can be inhibited. Since the number of winding and the number of layers can be increased, the energy density can be improved.

In order to control the membrane thickness, flexural modulus, and basis weight-equivalent puncture strength in a satisfactory balance, it is important that the polydispersity (Mw/Mn) of the polyolefin starting material, the stretch ratio in the longitudinal direction in the stretching step, the stretching strain rate in the heat setting step, the relaxation strain rate in the heat setting step, and the temperature and stretch ratio in the fine stretching step be controlled.

The flexural rigidity is an index expressing the difficulty in the flexural deformation of a material, and indicates the force with which a material returns to the original shape when the material is bent. Conventionally, it is known that the flexural rigidity is proportional to the cube of the thickness when the material is a rectangular body. However, it is found that when the membrane thickness of a polyolefin microporous membrane is decreased to reduce the rigidity, the amount of resin per unit area is reduced and the safety of the cell is decreased. Therefore, in the present embodiment, a polyolefin microporous membrane which has reduced rigidity, can inhibit spring-back, and has satisfactory cell safety has been developed.

[Flexural rigidity characteristic]

Herein, flexural rigidity means the force for a sample to return the original flat state thereof when a sample cut into MD 20 cm × TD 20 cm is fixed by chucks on two opposing sides, wherein one of the sides is fixed and the opposing side is moved in a curve, bending the sample into a curved shape as in FIG. 1. Generally, this acting force is called "flexural rigidity", and is an index expressing the flexibility of a sample to a bending motion.

The present invention is characterized in that the value obtained by dividing the flexural rigidity by the cube of the membrane thickness is small, and a membrane having high flexibility to bending is preferable. When the flexural modulus is 1.5 ($\mu$gf $\times$ cm$^2$/cm)/$\mu$m$^3$ or less, spring-back does not occur in the electrode-stacking step by a zigzag folding pattern and it is thus not necessary to consider the amount of spring-back when a roll of electrodes and a microporous membrane, etc., is inserted into an exterior can of a cell, whereby the number of layers of electrodes in the stack or roll can be increased by that amount, and the energy density is improved. When the flexural modulus is 1.1 ($\mu$gf $\times$ cm$^2$/cm)/$\mu$m$^3$ or less, since the rigidity of the membrane during the winding of the electrodes and membrane is low, even when the roll of electrodes and a microporous membrane is pressed, spring-back does not occur and it is thus not necessary to consider the amount of spring-back when the roll is inserted into an exterior can of a cell, whereby the number of winding electrodes can be increased by that amount, and the energy density of the cell can be improved.

From the viewpoint of inhibiting the occurrence of wrinkles during the production of an electrode, the lower limit of the flexural modulus of the polyolefin microporous membrane is 0.3 ($\mu$gf $\times$ cm$^2$/cm)/$\mu$m$^3$ or greater, preferably 0.4 ($\mu$gf $\times$ cm$^2$/cm)/$\mu$m$^3$ or greater, and more preferably 0.5 ($\mu$gf $\times$ cm$^2$/cm)/$\mu$m$^3$ or greater. From the viewpoint of improving energy density, the upper limit thereof is 1.5 ($\mu$gf $\times$ cm$^2$/cm)/$\mu$m$^3$ or less, preferably 1.35 ($\mu$gf $\times$ cm$^2$/cm)/$\mu$m$^3$ or less. From the viewpoint described above, the upper limit is more preferably 1.1 ($\mu$gf $\times$ cm$^2$/cm)/$\mu$m$^3$ or less, even more preferably 1.0 ($\mu$gf $\times$ cm$^2$/cm)/$\mu$m$^3$ or less, still more preferably 0.9 ($\mu$gf $\times$ cm$^2$/cm)/$\mu$m$^3$ or less, particularly preferably 0.8 ($\mu$gf $\times$ cm$^2$/cm)/$\mu$m$^3$ or less, and most preferably 0.7 ($\mu$gf $\times$ cm$^2$/cm)/$\mu$m$^3$ or less.

[Basis weight-equivalent puncture strength]

Herein, the puncture strength is measured as the maximum puncture load using a KES-5G (trademark) handy-type compression tester manufactured by Kato Tech Co., Ltd., and the value obtained by dividing the puncture strength by the basis weight is used as the basis weight-equivalent puncture strength. By setting the basis weight-equivalent puncture strength high, even when a cell is subjected to impact, the membrane does not rupture and insulating property is maintained. Thus, the cell does not undergo thermal runaway and safety can be assured. From this viewpoint, the basis weight-equivalent puncture strength is 70 gf/(g/m$^2$) or greater. The higher the puncture strength, generally the greater the ratio of shrinkage (hereinafter, thermal shrinkage) when the microporous membrane is subjected to heat. From the viewpoint of inhibiting thermal shrinkage, the upper limit of the basis weight-equivalent puncture strength is 160 gf/(g/m$^2$) or less.

[Constituent elements]

The constituent elements and preferable embodiments of the polyolefin microporous membrane will be described below.

Examples of the polyolefin microporous membrane include a microporous membrane comprising a polyolefin resin; a microporous membrane comprising a resin such as polyethylene terephthalate, polycycloolefin, polyethersulfone, polyamide, polyimide, polyimideamide, polyaramid, polycycloolefin, nylon, or polytetrafluoroethylene; a material woven from polyolefin-based fibers (woven fabric), and a nonwoven fabric of polyolefin-based fibers. Among these, a microporous membrane comprising a polyolefin resin (hereinafter also referred to as "polyolefin microporous membrane" is preferable from the viewpoint of achieving both high puncture strength and low flexural rigidity.

The polyolefin resin microporous membrane will be described. From the viewpoint of improving shutdown performance when forming the polyolefin microporous membrane for secondary cells, it is preferable that the polyolefin microporous membrane be a microporous membrane formed of a polyolefin resin composition in which a polyolefin resin accounts for 50% by weight to 100% by weight of the resin component constituting the microporous membrane. The proportion of the polyolefin resin in the polyolefin resin composition is preferably 60% by weight to 100% by weight, even more preferably 70% by weight to 100% by weight, and most preferably 95% by weight to 100% by weight.

The polyolefin resin contained in the polyolefin resin composition is not particularly limited. Examples thereof include homopolymers which can be used as monomers, such as ethylene, propylene, 1-butene, 4-methyl-1-pentene, 1-hexene, and 1-octene; copolymers, and multistage polymers. These polyolefin resins may be used alone or in combination of two or more.

From the viewpoint of reducing flexural rigidity, the polyolefin resin is preferably polyethylene, polypropylene, an ethylene-propylene copolymer, a copolymer other than ethylene-propylene copolymer, and mixtures thereof.

Specific examples of the polyethylene include low-density polyethylene, linear low-density polyethylene, medium-density polyethylene, high-density polyethylene, and ultra-high molecular weight polyethylene. Specific examples of the polypropylene include isotactic polypropylene, syndiotactic polypropylene, and atactic polypropylene, etc.

Specific examples of the copolymer include ethylene-propylene random copolymer and ethylene-propylene rubber, etc.

From the viewpoint of increasing puncture strengthen when forming the polyolefin microporous membrane for secondary cells, it is preferable that the polyolefin resin microporous membrane be a microporous membrane formed of a polyethylene composition in which ethylene accounts for 50% by weight to 100% by weight of the resin component constituting the microporous membrane. The proportion of the ethylene component constituting the microporous membrane is preferably 60% by weight to 100% by weight, even more preferably 70% by weight to 100% by weight, and most preferably 90% by weight to 100% by weight.

From the viewpoint of reducing rigidity, the polyethylene in the polyolefin resin preferably has a melting point within the range of 120 °C to 150 °C, more preferably 125 °C to 140 °C.

From the viewpoint of reducing rigidity, the proportion of the polyethylene in the polyolefin resin is preferably 50% by weight or greater, more preferably 70% by weight or greater, and even more preferably 80% by weight or greater, and preferably 100% by weight or less, more preferably 97% by weight or less, and even more preferably 95% by weight or less. It is preferable that the proportion of the polyethylene in the polyolefin resin be 100% by weight from the viewpoint of strength development.

Without wishing to be bound by theory, when forming the polyolefin microporous membrane for secondary cells, in order to achieve high strength while keeping the flexural rigidity low, it is preferable that polyethylene, specifically medium-density polyethylene (MDPE) and high-density polyethylene (HDPE), be used as the polyolefin resin. In the present invention, medium-density polyethylene refers to polyethylene of 0.930 to 0.942 g/cm$^3$, and high-density polyethylene refers to polyethylene of 0.942 to 0.970 g/cm$^3$. From the viewpoint of further reducing the flexural rigidity, medium-density polyethylene is preferable. The density of the polyethylene in the present invention is measured according to the density gradient tube method described in JIS K7112 (1999).

From the viewpoint of improving the thermal resistance of the microporous membrane, a mixture of polyethylene and polypropylene may be used as the polyolefin resin. In this case, the proportion of the polypropylene with respect to the overall polyolefin resin in the polyolefin resin composition is preferably greater than 0% by weight and 20% by weight or less, or preferably 1% by weight to 20% by weight, more preferably 2% by weight to 15% by weight, even more preferably 2% by weight to 10% by weight, from the viewpoint of reducing flexural rigidity of the membrane. Further, from the viewpoint of improving moldability, the proportion of the polypropylene with respect to the overall polyolefin resin in the polyolefin resin composition is preferably 3% by weight to 10% by weight, more preferably 5% by weight to 10% by weight.

The polyolefin resin composition may contain any additive. Examples of the additive include polymers other than the polyolefin resin; inorganic fillers, phenol-based, phosphorus-based, and sulfur-based antioxidants, metal soaps such as calcium stearate and zinc stearate; ultraviolet absorbers; photostabilizers; antistatic agents; antifogging agents, and color pigments. The overall addition amount of these additives is preferably 20% by weight or less, more preferably 10% by weight or less, and even more preferably 5% by weight or less with respect to 100% by weight of the polyolefin resin, from the viewpoint of improving shutdown performance.

When the microporous membrane is a polyolefin microporous membrane, the viscosity-average molecular weight (Mv) of the polyolefin resin used as a starting material is preferably 30,000 to 5,000,000, more preferably 80,000 or greater and less than 3,000,000, and even more preferably 150,000 or greater and less than 2,000,000. It is preferable that the viscosity-average molecular weight be 30,000 or greater since high strength tends to be realized due to the entanglement of polymers. However, it is preferable that the viscosity-average molecular weight be 5,000,000 or less from the viewpoint of controlling the rigidity of the polyolefin microporous membrane. When the viscosity-average molecular weight is greater than 5,000,000, the flowability of the resin deteriorates, and the rigidity becomes difficult to control. Further, when forming the polyolefin microporous membrane for secondary cells, it is preferable that the viscosity-average molecular weight be less than 2,000,000, since the physical properties becomes easier to control, from the viewpoint of obtaining a balance between the entanglement of resins and the processability of resins and achieving both low rigidity and high strength.

The polyolefin microporous membrane according to the embodiment of the present invention can be manufactured by a production method of a polyolefin microporous membrane comprising steps (A) to (E) described below, as one example of the production method thereof.

The polydispersity (Mw/Mn) of the polyolefin starting material is preferably 4.0 to 12.0. The polydispersity (Mw/Mn) is measured according to the measurement method described later. It is preferable that the polydispersity (Mw/Mn) be within this range, since a certain amount of each of the high molecular weight component and the low molecular weight component is present, and the flexural rigidity of the polyolefin microporous membrane tends to be low while puncture strength and thermal resistance are ensured. From this viewpoint, the lower limit of the polydispersity (Mw/Mn) of the polyolefin starting material is preferably 6.0 or greater, more preferably 7.0 or greater. From the viewpoint of decreasing the porosity during the heat setting (HS) step, the upper limit thereof is preferably 12.0 or less, more preferably 10.0 or less. Therefore, the range of the polydispersity of the polyolefin starting material is, in the order of preference, 6.0 to 12.0, 7.0 to 12.0, 4.0 to 10.0, 6.0 to 10.0, and 7.0 to 10.0. To keep the flexural rigidity low, the polyolefin starting material having a polydispersity (Mw/Mn) of 4.0 to 12.0 is preferably contained in an amount of 50% by weight or greater, more preferably 70% by weight or greater. To keep the flexural rigidity low, the polyolefin starting material for controlling polydispersity is preferably polyethylene.

The ratio (Mz/Mw) of Z-average molecular weight and weight-average molecular weight of the polyolefin starting material is preferably 2.0 to 7.0. The ratio (Mz/Mw) is measured according to the measurement method in the Examples described later. By increasing the Mz/Mw of the starting polymer material, the flexural rigidity of the polyolefin microporous membrane tends to be reduced. From this viewpoint, the Mz/Mw of the polyolefin starting material is more preferably 4.0 or greater, even more preferably 5.0 or greater. Therefore, the range of the Mz/Mw of the polyolefin starting material is, in the order of preference, 4.0 to 7.0 and 5.0 to 7.0.

[Details of microporous membrane]

The polyolefin microporous membrane has a porous structure in which a large number of very small pores aggregate to form dense through-holes, and thus has both superior ion permeability and high strength in a state containing an electrolytic solution. The microporous membrane may be a single-layer membrane composed of a material described above or a multi-layered membrane.

The membrane thickness of the microporous membrane has a lower limit of 1 $\mu$m (1.0 $\mu$m) or greater in order to have mechanical strength and maintain insulating property. To improve the safety of a cell by ensuring the resin amount per unit area, the membrane thickness is preferably 2 $\mu$m (2.0 $\mu$m) or greater, more preferable 3 $\mu$m (3.0 $\mu$m) or greater. To ensure insulating property in case of lithium dendrite growth, the membrane thickness is preferable 6 $\mu$m (6.0 $\mu$m) or greater. From the viewpoint of increasing the capacity of the secondary cell, the membrane thickness of the microporous membrane is 17.0 $\mu$m or less, preferably 15 $\mu$m (15.0 $\mu$m) or less, more preferably 11 $\mu$m (11.0 $\mu$m) or less, and even more preferably 10 $\mu$m (10.0 $\mu$m) or less. The membrane thickness of the microporous membrane can be adjusted by controlling the distance between cast rolls, the stretch ratio in the stretching step, etc.

The porosity of the microporous membrane is preferably 25% to 60%, more preferably 30% to 50%, and even more preferably 35% to 45%. From the viewpoint of output, the porosity of the microporous membrane is preferably 25% or greater, more preferably 30% or greater, and even more preferably 35% or greater. From the viewpoint of the safety of a cell, the porosity of the microporous membrane is preferably 60% or less, more preferably 50% or less, and even more preferably 45% or less. The porosity of the microporous membrane can be adjusted by controlling the mixture ratio of the polyolefin resin composition and plasticizer, stretching temperature, stretch ratio, heat setting temperature, stretch ratio during heat setting, relaxation rate during heat setting, or combinations thereof.

The air permeability of the microporous membrane is preferably 30 sec/100 cm$^3$ to 250 sec/100 cm$^3$, more preferably 70 sec/100 cm$^3$ to 200 sec/100 cm$^3$, more preferably 80 sec/100 cm$^3$ to 180 sec/100 cm$^3$, and even more preferably 90 sec/100 cm$^3$ to 150 sec/100 cm$^3$. The air permeability of the microporous membrane is preferably 70 sec/100 cm$^3$ or greater from the viewpoint of ensuring puncture strength, and preferably 200 sec/100 cm$^3$ or less from the viewpoint of output characteristic.

The average pore size of the microporous membrane is preferably 0.010 $\mu$m to 0.080 $\mu$m, more preferably 0.020 $\mu$m or greater, even more preferably 0.030 $\mu$m or greater, particularly preferably 0.035 $\mu$m or greater, or 0.040 $\mu$m or greater, and most preferably 0.045 $\mu$m or greater, in order to achieve high ion permeability, excellent withstand voltage, and high strength. Further, the upper limit of the average pore size is more preferably 0.075 $\mu$m or less, even more preferably 0.070 $\mu$m or less, and particularly preferably 0.065 $\mu$m or less. The average pore size can be adjusted by controlling the stretching temperature, stretch ratio, heat setting temperature, stretch ratio during heat setting, or relaxation rate during heat setting, or combinations thereof.

The puncture strength of the microporous membrane that is not basis weight-equivalent (hereinafter, simply referred to as puncture strength) is preferably 100 gf to 950 gf. The puncture strength is preferably 100 gf or greater from the viewpoint of the safety of the cell, and is preferably 950 gf or less from the viewpoint of flexural rigidity and thermal shrinkage rate of the polyolefin microporous membrane. The lower limit value of the puncture strength of the microporous membrane is more preferably 300 gf or greater. It is more preferable to set the puncture strength to 300 gf or greater because when the cell is subjected to impact or when foreign matter is mixed between an electrode and the polyolefin microporous membrane, the membrane does not rupture and insulating property is maintained, whereby the cell does not undergo thermal runaway and safety can be assured. The upper limit value of the puncture strength of the microporous membrane is more preferably 870 gf or less. It is more preferable to set the puncture strength to 870 gf or less because even when a rise in temperature within a cell occurs for some reason, thermal shrinkage does not occur in the polyolefin membrane, whereby insulating property is maintained and safety is improved. The puncture strength is even more preferably 360 gf to 800 gf, particularly 400 gf or greater and less than 740 gf, and most preferably 450 gf to 700 gf. Further, the basis weight-equivalent puncture strength is preferably 70 gf/(g/m$^2$) or greater from the viewpoint of the safety within the cell, and is preferably 160 gf/(g/m$^2$) or less from the viewpoint of low rigidity of the membrane. In view of the balance of the safety of the cell and thermal shrinkage, the basis weight-equivalent puncture strength is more preferably 75 gf/(g/m$^2$) to 150 gf/(g/m$^2$), even more preferably 80 gf/(g/m$^2$) to 140 gf/(g/m$^2$), particularly preferably 85 gf/(g/m$^2$) to 130 gf/(g/m$^2$), and most preferably 90 gf/(g/m$^2$) to 120 gf/(g/m$^2$).

The basis weight of the polyolefin microporous membrane is preferably 0.1 g/m$^2$ or greater from the viewpoint of inhibiting thermal runaway of a cell, and preferably 20 g/m$^2$ or less from the viewpoint of increasing the capacity of a cell. More preferably, the basis weight of the polyolefin microporous membrane is 1 g/m$^2$ to 10 g/m$^2$.

The absolute value of the withstand voltage of the microporous membrane is preferably 0.5 kV or greater, more preferably 0.7 kV or greater, even more preferably 0.9 kV or greater, and most preferably 1.1 kV or greater, from the viewpoint of the safety of the cell. From the same viewpoint, the withstand voltage per unit membrane thickness of the microporous membrane is preferably 0.130 kV/$\mu$m or greater, more preferably 0.140 kV/$\mu$m or greater, and even more preferably 0.150 kV/$\mu$m or greater.

The meltdown temperature of the microporous membrane is preferably 150 °C or higher, more preferably 160 °C or higher, even more preferably 170 °C or higher. A meltdown temperature of 150 °C or higher means that the microporous membrane does not rupture until 150 °C, and thus the safety of the secondary cell can be ensured. The meltdown temperature can be adjusted within the range of 150 °C or higher by the molecular weight of the polyolefin or the stretching and heat setting conditions.

The shutdown temperature of the microporous membrane is preferably 150 °C or lower, more preferably 147 °C or lower, even more preferably 143 °C or lower, and most preferably 140 °C or lower. A shutdown temperature of 150 °C or lower means that when an abnormal reaction occurs or the temperature in the cell rises, the pores of the separator are closed until 150 °C is reached. Therefore, the lower the shutdown temperature, the more the safety is improved since the flow of lithium ions between electrodes is stopped quickly at low temperature. From the viewpoint of not deteriorating cell performance even when exposed to high temperature exceeding 100 °C, the shutdown temperature of the microporous membrane is preferably 125 °C or higher, more preferably 130 °C or higher.

The tensile strength of the microporous membrane, in both the MD and the TD, is preferably 500 kgf/cm$^2$ or greater, preferably 700 kgf/cm$^2$ or greater, preferably 1000 kgf/cm$^2$ or greater, or preferably 1000 kgf/cm$^2$ to 5000 kgf/cm$^2$. The tensile strength, in both the MD and the TD, is more preferably 1500 kgf/cm$^2$ to 4500 kgf/cm$^2$, even more preferably 2000 kgf/cm$^2$ to 4000 kgf/cm$^2$, and most preferably 2500 kgf/cm$^2$ to 3500 kgf/cm$^2$. When the tensile strength is less than 1000 kgf/cm$^2$, the membrane is unable to withstand the stress applied during the winding of the electrodes and polyolefin microporous membrane and may rupture. From the viewpoint of inhibiting thermal shrinkage of the polyolefin microporous membrane, the tensile strength is preferably less than 5000 kgf/cm$^2$.

The closer the values of tensile strength in the MD and the TD of the polyolefin microporous membrane, the less likely the membrane ruptures in the direction of lower strength when foreign matter is mixed therein or an external impact is received, and the more the safety is improved. From this viewpoint, the ratio of MD/TD tensile strengths of the polyolefin microporous membrane is preferably 0.80 to 1.20, more preferably 0.85 to 1.15, even more preferably 0.90 to 1.10, and most preferably 0.95 to 1.05.

The tensile elongation of the microporous membrane, in both the MD and the TD, is preferably 10% or greater, more preferably 30% or greater, and most preferably 50% or greater. When the tensile elongation is less than 10%, when the cell is deformed due to an external impact, the deformation cannot be relieved and the membrane ruptures. Consequently, the electrodes may be brought into contact with each other, causing a short circuit.

<Method for producing polyolefin microporous membrane>

The production method of the present invention is not particularly limited. One example of the method comprises the following steps:

(A) extruding a polyolefin composition containing a polyolefin resin and a pore-forming material to form a gel-like sheet;
(B) stretching the gel-like sheet biaxially to form a stretched sheet;
(C) extracting the pore-forming material from the stretched sheet to form a porous membrane;
(D) heat setting the porous membrane; and
(E) fine stretching in the MD.

For the production method of the polyolefin microporous membrane, in particular, a polyolefin starting material of 50% by weight or greater having a polydispersity of 4.0 to 12.0 is used in the step (A); the ratio in the longitudinal direction in the step (B) is 6 to 10; the step (D) includes carrying out a stretching operation and a relaxation operation each at least once, the stretching strain rate in the step (D) is 11%/sec or less, the relaxation strain rate in the step (D) is 10%/sec or less; and fine stretching of 1.0% to 5.0% in the MD is carried out at a temperature of (the melting point of the polyolefin microporous membrane - 70 °C) to (the melting point thereof - 30 °C) in the step (E).

The production steps of the polyolefin microporous membrane and preferable embodiments thereof will be described below.

[Extrusion step (A)]

In the step (A), a polyolefin composition is extruded to form a gel-like sheet. The polyolefin composition may contain a polyolefin resin, a pore-forming agent, etc. The gel-like sheet can be obtained by melt-kneading the polyolefin resin and the pore-forming agent together to form a sheet.

First, the polyolefin resin is melt-kneaded with the pore-forming agent. Examples of the melt-kneading method include a kneading method in which the polyolefin resin and, if necessary, other additives are charged in a resin kneading apparatus such as an extruder, a kneader, a Labo-Plasto mill, a kneading roll, or a Banbury mixer, and the resin component is heated to melting while the pore-forming material is introduced at any ratio.

The polyolefin resin contained in the polyolefin composition can be determined in accordance with a predetermined resin starting material of the polyolefin microporous membrane thus obtained. Specifically, the polyolefin resin used in the extrusion step (A) may include the polyolefin resin described in relation to the polyolefin microporous membrane according to the embodiment of the present invention. The proportion of the polyolefin resin in the polyolefin composition is preferably 10 to 80% by weight, more preferably 15 to 60% by weight, and even more preferably 20 to 40% by weight, based on the weight of the polyolefin composition, from the viewpoint of sheet moldability.

From the viewpoint of achieving both high puncture strength and low flexural rigidity, the polyolefin starting material is preferably a polyolefin having a polydispersity (Mw/Mn) of 4.0 to 12.0, more preferably polyethylene having an Mw/Mn of 4.0 to 12.0. To keep the flexural rigidity low, the starting material having a polydispersity (Mw/Mn) of 4.0 to 12.0 is preferably contained in an amount of 50% by weight or greater, more preferably 70% by weight or greater.

The polyolefin resin contained in the polyolefin composition for the step (A) may include polyethylene or may include polyethylene and polypropylene. In that case, the proportion of the polyethylene may be 50% by weight to 100% by weight, and the proportion of polypropylene may be 0% by weight to 20% by weight.

Examples of the pore-forming material include plasticizers, inorganic materials, and combinations thereof.

The plasticizer is not particularly limited. However, it is preferable to use a non-volatile solvent capable of forming a uniform solution above the melting point of the polyolefin. Specific examples of the non-volatile solvent include hydrocarbons such as liquid paraffin and paraffin wax; esters such as dioctyl butyrate and dibutyl butyrate; and higher alcohols such as oleyl alcohol and stearyl alcohol. After extraction, these plasticizers may be recovered by an operation such as distillation to be reused.

Among the plasticizers, liquid paraffin is preferable when the polyolefin resin is polyethylene or polypropylene, since liquid paraffin has high compatibility therewith, the interfacial peeling between the resin and the plasticizer is not likely to occur even when the melt-kneaded product is stretched, and uniform stretching tends to be easy to carry out.

The ratio of the polyolefin resin composition to the plasticizer can be determined in accordance with uniform melt-kneading and sheet moldability. The weight fraction of the plasticizer in the composition composed of the polyolefin resin composition and the plasticizer is preferably 20 to 90% by weight, more preferably 50 to 70% by weight. When the weight fraction of the plasticizer is 90% by weight or less, the melt tension during melt-molding tends to be sufficient for improving moldability. When the weight fraction of the plasticizer is 20% by weight or greater, the polyolefin molecular chain is not cleaved even when the mixture of the polyolefin resin composition and the plasticizer is stretched at a high ratio, a uniform and fine pore structure is easily formed, and the strength is easily increased.

The inorganic material is not particularly limited. Examples thereof include oxide-based ceramics such as alumina, silica (silicon oxide), titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomite, and quartz sand; and glass fibers. These can be used alone or in combination of two or more. Among these, silica is particularly preferable from the ease of extraction.

The ratio of the polyolefin resin composition to the inorganic material is preferably 3% by weight or greater of the inorganic material, more preferably 10% by weight or greater of the inorganic material, with respect to the total weight thereof from the viewpoint of obtaining satisfactory isolation. From the viewpoint of ensuring high strength, the ratio is preferably 60% by weight or less of the inorganic material, more preferably 50% by weight or less of the inorganic material.

Next, the melt-kneaded product is formed into a sheet to obtain a gel-like sheet. When melt-kneading is carried out by an extruder, the ratio (Q/N, unit: kg/(h·rpm)) of the extrusion rate (i.e., the discharge amount Q of the extruder: kg/hour) to the screw rotational speed N (rpm) of the extruder is preferably 0.1 to 7.0, more preferably 0.5 to 6.0, and even more preferably 1.0 to 5.0. When the melt-kneading is carried out under the condition of Q/N of 0.1 or greater and less than 7.0, the liquid paraffin phase-separated from the resin disperses more easily, and thus the pore structure becomes denser and the strength tends to be increased.

Examples of the method of producing the gel-like sheet include a solidifying method in which a melt-kneaded product is extruded through a T-die into a sheet, brought into contact with a thermal conductor, and cooled to a temperature sufficiently lower than the crystallization temperature of the resin component. Examples of the thermal conductor used for cooling and solidification include a metal, water, air, and a plasticizer. Among these, it is preferable to use a metal roll because of high thermal conducting efficiency. In addition, it is more preferable that the extruded gel-like sheet be sandwiched between rolls when brought into contact with the metal roll, which tends to further increase thermal conducting efficiency, align the sheet to increase membrane strength, and improve the surface smoothness of the sheet. The distance between cast rolls when extruding a melt-kneaded product into a sheet from a T-die is preferably 200 μm to 3,000 μm, more preferably 500 μm to 2,500 μm. When the distance between cast rolls is 200 μm or greater, the risk of membrane rupture in the subsequent stretching step can be reduced. When the distance between rolls is 3,000 μm or less, cooling rate is fast and uneven cooling is prevented.

The extruded sheet-like molded body or gel-like sheet may be rolled. Rolling may be carried out by, for example, a method using rolls. Particularly, orientation of the surface layer portion can be increased by rolling. The rolling surface ratio is preferably greater than 1 time and 3 times or less, more preferably greater than 1 time and 2 times or less. When the rolling ratio is greater than 1 time, surface orientation increases, and the ultimately obtained microporous membrane tends to have increased membrane strength. When the rolling ratio is 3 times or less, the difference in orientation between the surface layer portion and the center interior portion is small, and a uniform porous structure tends to be formed in the thickness direction of the membrane.

[Stretching step (B)]

In the step (B), the gel-like sheet obtained in the step (A) is stretched. The step (B) is carried out before the step (C) of extracting the pore-forming material from the sheet. The process of stretching the gel-like sheet in the step (B) is carried out at least once each in the longitudinal direction and the width direction (i.e., by biaxial stretching), from the viewpoint of controlling the flexural rigidity of the polyolefin microporous membrane.

In the step (B), the stretch ratio is preferably 6 or greater from the viewpoint of reducing flexural rigidity in the longitudinal direction. By increasing the stretch ratio in the state where the resin and the plasticizer are phase-separated, the plasticizer tends to inhibit orientation in the stretching direction, compared to stretching when only the resin is present. Thus, the flexural rigidity tends to be reduced while the strength is increased. In addition, the strain rate in the longitudinal direction or the width direction in the step (B) is not particularly limited, but is preferably 3%/sec or greater and less than 50%/sec. From the viewpoint of achieving both low rigidity and high strength, the strain rate is most preferably 10%/sec to 30%/sec.

In order to easily satisfy the flexural modulus of 0.3 (μgf × cm$^2$/cm)/μm$^3$ to 1.5 (μgf × cm$^2$/cm)/μm$^3$ in the step (B), the stretch ratio in the longitudinal direction (MD) can be 6 to 10 times. As a result, the spring-back when the roll is inserted into the exterior can and the spring-back at the folded portion of the separator when the electrodes and the separator are stacked together are inhibited, and the energy density is improved. From this point of view, to set the balance between rigidity and puncture strength of the membrane within the most satisfactory ranges, the stretch ratio in the longitudinal direction is preferably 6 to 9 times, even more preferably 7 to 8 times.

Examples of the stretching method may include methods such as simultaneous biaxial stretching, sequential biaxial stretching, multistage stretching, and multi-pass stretching. Among these, simultaneous biaxial stretching is preferable from the viewpoint of improvement in puncture strength, uniformity in stretching, and reduction in flexural rigidity.

Simultaneous biaxial stretching refers to a stretching method in which stretching in the longitudinal direction and stretching in the width direction are carried out at the same time. The stretch ratio in each direction may be different. Sequential biaxial stretching refers to a stretching method in which stretching in the longitudinal direction and the width direction are carried out independently. When stretching occurs in the longitudinal direction or the width direction, the other direction is unconstrained or fixed in length.

The stretch ratio in the step (B) is preferably in the range of 12 to 120 times in terms of surface ratio, more preferably in the range of 36 to 65 times. The stretch ratio in each axial direction is preferably in the ranges of 6 to 10 times in the longitudinal direction and 2 to 12 times in the width direction, more preferably in the ranges of 7 to 9 times in the longitudinal direction and 6 to 9 times in the width direction. When the overall area ratio is 12 times or greater, imparting sufficient strength to the porous membrane thus obtained tends to be possible. When the overall area ratio is greater than 120 times, the rigidity of the membrane becomes low and difficult to control. Thus, it is preferable that the overall area ratio be 120 times or less.

The stretching temperature in the step (B) is preferably 90 to 150 °C, more preferably 100 to 140 °C, and even more preferably 110 to 130 °C, from the viewpoint of meltability and membrane formability of the polyolefin resin.

[Extraction step (C)]

In the step (C), the pore-forming material is removed from the sheet-like molded body to obtain a porous membrane. Examples of the method to remove the pore-forming material include a method in which the sheet-like molded body is immersed in an extraction solvent to extract the pore-forming material and sufficiently dried. The extraction method of the pore-forming material may be a batch type or a continuous type. In order to inhibit the shrinkage of the microporous membrane, it is preferable that the end portion of the sheet-like molded body be restrained in the series of immersion and drying steps. The remaining amount of the pore-forming material in the microporous membrane is preferably less than 1% by weight with respect to the weight of the entire porous membrane.

The extraction solvent used when extracting the pore-forming material is preferably one that is a poor solvent of the polyolefin resin, is a good solvent of the pore-forming material, and has a boiling point lower than the melting point of the polyolefin resin. Examples of such an extraction solvent include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. These extraction solvents may be recovered by an operation such as distillation to be reused. When an inorganic material is used as the pore-forming material, an aqueous solution of, for example, sodium hydroxide or potassium hydroxide can be used as the extraction solvent.

[Heat setting step (D)]

In order to inhibit the shrinkage of the polyolefin microporous membrane, a thermal treatment of the microporous membrane for the purpose of heat setting is carried out in the heat setting step (D) after the plasticizer extraction in the step (C).

Examples of the thermal treatment of the microporous membrane include a stretching operation carried out in an atmosphere having a predetermined temperature and at a predetermined stretch ratio, for the purpose of adjusting physical properties, and/or a relaxation operation carried out in an atmosphere having a predetermined temperature and at a predetermined relaxation rate, for the purpose of reducing stretching stress. These thermal treatments can be carried out using a tenter or roll stretcher. The heat setting comprising the stretching and relaxation operations after the plasticizer extraction is preferably carried out in the width direction.

In the stretching operation of the step (D), the membrane is stretched at a stretch ratio of preferably 1.1 times or greater, more preferably 1.3 times or greater, and most preferably 1.5 times or greater in the longitudinal direction and/or the width direction, from the viewpoint of obtaining a porous membrane having higher strength and higher porosity.

The relaxation ratio is preferably 0.8 to 2.5 times, more preferably 1.2 to 2.3 times, and even more preferably 1.5 and 2.0 times. The relaxation ratio herein refers to the value obtained by dividing the dimension (mm) in the width direction of the membrane at the stretcher outlet by the dimension (mm) in the width direction of the membrane at the stretcher inlet in the heat setting step.

The relaxation operation is a contraction operation in the longitudinal direction and/or width direction of the membrane after the stretching operation. The relaxation rate is a value obtained by dividing the relaxation ratio in the heat setting step by the stretch ratio. The relaxation rate is preferably 1.0 or less, more preferably 0.90 or less, and even more preferably 0.85 or less. The relaxation rate is preferably 0.5 or greater from the viewpoint of increasing the strength of the membrane. The relaxation operation may be carried out in both the longitudinal and width directions or in one of the longitudinal direction and the width direction.

In the stretching operation in the TD of the step (D), the strain rate is preferably 11%/sec or less, more preferably 2%/sec to 11%/sec, even more preferably 3%/sec to 9%/sec, and most preferably 5%/sec to 8%/sec. The strain rate in the relaxation operation is preferable 10%/sec or less, more preferably 0.1%/sec to 10%/sec, even more preferably 0.5%/sec to 7%/sec, and most preferably 1.0%/sec to 5.0%/sec. The strain rate herein means the rate of change of an object per unit time before and after being subjected to a specific process. In the step (D), the flexural rigidity and the puncture strength of the microporous membrane can be controlled by setting the strain rates of each of the stretching and relaxation operations to a certain value or less, thereby achieving both low rigidity and high strength. Without wishing to be bound by theory, when the strain rate during stretching is high, the resin is pulled without relaxing the entanglement therein, and thus the rigidity of the membrane is increased. Further, it was found that when the strain rate during relaxation is high, the bowing of the membrane increases, and thus the flexural rigidity is increased. The calculation method of the strain rate and the strain rate ratio will be described below in the Examples.

The temperature of the heat setting comprising the stretching and relaxation operations is preferably within the range of 100 to 170 °C, from the viewpoint of the melting point of the polyolefin resin. It is preferable that the temperature of the stretching and relaxation operations be within the above range from the viewpoint of the balance of thermal shrinkage rate reduction and porosity. The lower limit of the heat setting temperature is more preferably 110 °C or higher, even more preferably 120 °C or higher, and still more preferably 125 °C or higher. The upper limit thereof is more preferably 170 °C or lower, even more preferably 160 °C or lower, still more preferably 150 °C or lower, and most preferably 145 °C or lower.

[Fine stretching step (E)]

For the method for producing the polyolefin microporous membrane, it is important that the step (E) be included. In order to control the rigidity of the membrane, in the step (E) after the step (D), fine stretching is carried out preferably at 1.0% to 5.0% in the longitudinal direction, more preferably at 1.5 to 4.0% in the MD, even more preferably at 2.0% to 4.0% in the MD, and particularly preferably at 2.0 to 3.5% in the MD by a roll stretcher or a tenter. Without wishing to be bound by theory, by carrying out the fine stretching at 1.0% to 5.0% in the step (E), the flexural modulus can be controlled within a predetermined range.

For the stretching temperature in the step (E), the fine stretching is preferably carried out within the temperature range of (melting point - 70) °C to (melting point - 30) °C of the polyolefin microporous membrane. The temperature range of the fine stretching is more preferably (melting point - 60) °C to (melting point - 40) °C of the membrane. In the present embodiment, it was found that the flexural modulus can be controlled within the specified range by setting the stretch ratio in the step (B) and each strain rate in the step (C) to the preferable ranges, and then carrying out the fine stretching within the above temperature range in the step (E).

<Formation of inorganic coating layer>

From the viewpoint of safety, dimensional stability, and thermal resistance, an inorganic coating layer can be provided on the polyolefin microporous membrane surface. The inorganic coating layer is a layer containing an inorganic component such as inorganic particles, and may contain a binder resin to bind the inorganic particles to each other or a dispersant to disperse the inorganic particles in the binder resin, if desired.

Examples of the inorganic particles include oxide-based ceramics such as alumina, silica, titania, zirconia, magnesia, ceria, yttria, zinc oxide, and iron oxide; nitride-based ceramics such as silicon nitride, titanium nitride, and boron nitride; ceramics such as silicon carbide, calcium carbonate, magnesium sulfate, aluminum sulfate, barium sulfate, aluminum hydroxide, aluminum oxide hydroxide, potassium titanate, talc, kaolinite, dacite, nacrite, halloysite, pyrophyllite, montmorillonite, sericite, mica, amesite, bentonite, asbestos, zeolite, calcium silicate, magnesium silicate, diatomite, and quartz sand; and glass fibers. The inorganic particles may be used alone or in combination of a plurality thereof.

Examples of the binder resin include conjugated diene polymers, acrylic polymers, polyvinyl alcohol resins, and fluorine-containing resins. Further, the binder resin can be in latex form or contained in water or an aqueous solvent. The dispersant is adsorbed on surfaces of the inorganic particles in a slurry and stabilizes the inorganic particles by electrostatic repulsion. Examples thereof include polycarboxylates, sulfonates, polyoxyethers, and surfactants.

The inorganic coating layer can be formed by, for example, applying and drying a slurry containing the components described above on the polyolefin microporous membrane surface.

<Formation of organic coating layer>

An adhesive layer (organic coating layer) which further demonstrates adhesiveness to the electrode may be attached to the polyolefin microporous membrane or the inorganic coating layer. When the adhesive layer is provided, for example, deformation in a laminated cell can be inhibited.

<Polyolefin microporous membrane for secondary cells>

The polyolefin microporous membrane according to the embodiment of the present invention can be used as a separator for lithium-ion secondary cells. By incorporating the polyolefin microporous membrane into a lithium-ion secondary cell, thermal runaway of the lithium-ion secondary cell can be inhibited.

Unless specified otherwise, the measurement values of various physical properties described above are measured according to the measurement methods in the Examples described below.

[EXAMPLES]

Hereinafter, the present embodiment will be more specifically described with reference to the Examples and Comparative Examples, but is not limited thereto as long as the present embodiment does not exceed the scope thereof. The physical properties in the Examples were measured by the following methods.

Unless specified otherwise, each measurement was carried out in an environment at room temperature of 23 °C $\pm$ 2 °C and humidity of 40% $\pm$ 5%.

[Viscosity-average molecular weight]

The limiting viscosity [$\eta$] (dl/g) at 135 °C in a decalin solvent was determined based on ASTM-D4020.

For polyethylene, the Mv was calculated from the following formula:

$$[\eta] = 6.77 \times 10^{-4} \text{Mv}^{0.67}$$

For polypropylene, the Mv was calculated from the following formula:

$$[\eta] = 1.10 \times 10^{-4} \text{Mv}^{0.80}$$

[Measurements of polydispersity (Mw/Mn) of polyethylene and ratio (Mz/Mw) of Z-average molecular weight to weight-average molecular weight by GPC-light scattering (light scattering-absolute method)]

Using GPC (gel permeation chromatography) connected to a differential refractive index detector and a light scattering detector, the number-average molecular weight (Mn), the weight-average molecular weight (Mw), the Z-average molecular weight (Mz), the polydispersity (Mw/Mn), and the ratio (Mz/Mw) of the Z-average molecular weight to the weight-average molecular weight of each resin were measured under the following conditions. Specifically, a PL-GPC200 with a differential refractive index detector (RI) and a light scattering detector (PD2040) built-in, manufactured by Agilent, was used. As the column, two Agilent PLgel MIXED-A (13 $\mu$m, 7.5 mm I.D. $\times$ 30 cm) connected in series were used. At a column temperature of 160 °C, 1,2,4-trichlorobenzene (containing 0.05 wt% of 4,4'-Thiobis(6-tert-butyl-3-methylphenol)) as an eluent was measured at a flow rate of 1.0 ml/min and an injection amount of 500 $\mu$L to obtain an RI chromatogram and a light scattering chromatogram having scattering angles of 15° and 90°. Using the Cirrus software, the number-average molecular weight (Mn), the weight-average molecular weight (Mw), and the Z-average molecular weight were determined from the obtained chromatograms. The values of Mz and Mw were used to obtain the ratio (Mz/Mw) of the Z-average molecular weight to the weight-average molecular weight, and the values of Mw and Mn were used to obtain the polydispersity (Mw/Mn). For the refractive index increment of polyethylene, 0.053 ml/g was used.

[DSC measurement (differential scanning calorimetric)]

DSC was measured using a DSC60 manufactured by Shimadzu Corporation. First, a PO microporous membrane was punched into circles having a diameter of 5 mm. A plurality of circles were stacked to make 3 mg, which was then used as a measurement sample. This sample was set on an aluminum open sample pan having a diameter of 5 mm, a clamping cover was placed on the sample, and the sample was fixed to the aluminum pan by a sample sealer. Under a nitrogen atmosphere, the temperature was elevated from 30 °C to 200 °C at a heating rate of 10 °C/min (first temperature elevation). After holding at 200 °C for 5 min, the temperature was dropped from 200 °C to 30 °C at a cooling rate of 10 °C/min. Subsequently, after holding at 30 °C for 5 min, the temperature was elevated again from 30 °C to 200 °C at a heating rate of 10 °C/min (second temperature elevation). In the melting endothermic curve of the second temperature elevation, the temperature at the maximum of the curve was used as the melting point of the PO microporous membrane. In the case of a plurality of maximum values, the temperature at the maximum of the largest melting endothermic curve was adopted as the melting point (Tm) of the PO microporous membrane.

[Density (g/cm$^3$)]

The density of the sample was measured by density gradient tube method (23 °C) in accordance with JIS K7112:1999.

[Basis weight (g/m$^2$)]

The basis weight is the weight (g) of the polyolefin microporous membrane per unit area (1 m$^2$). After obtaining a 1 m × 1 m sample, the weight was measured with an electronic scale (AUW120D) manufactured by Shimadzu Corporation. When sampling in 1 m × 1 m was not possible, a sample was cut into an appropriate area and the weight was measured. Thereafter, the weight was converted to weight (g) per unit area (1 m$^2$).

[Thickness of each layer ($\mu$m)]

Using a micro-thickness meter (Type KBN, tip diameter $\Phi$ 5 mm) manufactured by Toyo Seiki Seisaku-sho, Ltd., thickness was measured at an ambient temperature of 23 ± 2 °C. When measuring the thickness, a plurality of 10 cm × 10 cm sheets were sampled from the microporous membrane and then stacked to 15 $\mu$m or higher. Nine points were measured and the average value was calculated. The average value divided by the number of stacked sheets was used as the thickness of one sheet.

[Porosity (%)]

A 10 cm × 10 cm square sample was cut from the polyolefin microporous membrane, the volume (cm$^3$) and mass (g) thereof were determined, and these values and the density (g/cm$^3$) were used in the following formula:

$$\text{Porosity } (\%) = (\text{volume} - \text{mass/density of mixed composition})/\text{volume} \times 100$$

The density of the mixed composition is a value calculated from the densities and mixing ratio of the polyolefin resin and other components.

[Air permeability (sec/100 cm$^3$)]

The air permeability was measured with an Oken-type Air Permeability Tester "EGO2" from Asahi Seiko Co., Ltd.
The measured value of air permeability is a value obtained by measuring the air permeability at a total of three points, one point at 5 cm from each of the edges and one point in the center along the width direction of the membrane, and calculating the average thereof.

[Puncture test and basis weight-equivalent puncture strength]

Using a KES-5G (trademark) handy-type compression tester manufactured by Kato Tech Co., Ltd., the microporous membrane was fixed to a sample holder having an opening diameter of 11.3 mm. Next, the center portion of the fixed microporous membrane was subjected to a puncture test using a needle tip with a radius of curvature of 0.5 mm at a puncture speed of 2 mm/sec and under an atmosphere having a room temperature of 23 °C and humidity of 40%. The puncture strength (gf) was measured thereby as the maximum puncture load, and the displacement (mm) of the needle from the contact of the needle with the microporous membrane to reaching the maximum stress (puncture strength) was measured as the puncture elongation.
The measured value from the puncture test is a value obtained by measuring at a total of three points, one point 5 cm from each of the edges and one point in the center along the width direction of the membrane, and calculating the average thereof.
The basis weight-equivalent puncture strength is determined by the following formula: Basis weight-equivalent puncture strength [gf/(g/m $^2$)] = puncture strength [gf]/basis weight [g/m$^2$]

[Pore size ($\mu$m)]

The pore size ($\mu$m) was measured using a palm porometer (Porous Materials, Inc.: CFP-1500AE) in accordance with the half-dry method. A perfluoropolyester (trade name "Galwick", surface tension of 15.6 dyn/cm) manufactured by the same company was used for the immersion liquid. For the drying and wetting curves, the applied pressure and the air permeation amount were measured. From the pressure PHD (Pa), which is the intersection of the half-curve obtained from the drying curve and the wetting curve, an average pore size dHD ($\mu$m) was determined by the following formula and used as the pore size:

$$dHD = 2860 \times \gamma/PHD$$

[Flexural rigidity]

Using a KES-FB2-A pure bending tester from Kato Tech Co., Ltd., the flexural rigidity of a membrane sample was measured at an ambient temperature of 23 ± 2 °C and an ambient humidity of 40 ± 2%. A sample of MD 20 cm × TD 20 cm was cut and chucked on both edges in the TD to the fixed chuck (2) and the movable chuck (3), as shown in FIG. 1. The flexural rigidity in the MD was measured in accordance with the instruction manual. The settings are as follows.

Analog meter needle: 10 V
SENS: 4
Rate of bending deformation: 0.5 cm$^{-1}$/sec
Curvature: ±2.5 cm$^{-1}$

When the curvature is changed from 0.5 (1/cm) to 1.5 (1/cm) in the upward direction and from - 0.5 (1/cm) to -1.5 (1/cm) in the downward direction, the flexural rigidity (gf × cm$^2$/cm) is calculated as the rate of change of the bending moment per unit width. When the curvature is changed in the same range, the greater the bending moment, the greater the resistance to bending, thus meaning that the separator is rigid. The average value when the separator is bent once in the upward direction and once in the downward direction is adopted as the flexural rigidity.

The flexural modulus (μgf × cm$^2$/cm)/μm$^3$ is calculated as follows. In the calculation of the flexural modulus, the unit of the flexural rigidity (gf × cm$^2$/cm) is converted to (μgf × cm$^2$/cm) before the calculation.

$$\text{Flexural modulus } [(\mu gf \times cm^2/cm)/\mu m^3] = \text{flexural rigidity } [\mu gf \times cm^2/cm]/\text{membrane thickness } [\mu m]^3$$

When measuring the flexural rigidity in the TD, a sample cut into MD 20 cm × TD 20 cm is chucked on both edges in the MD and measured in the same manner as above.

When the polyolefin microporous membrane has an inorganic coating layer and/or an organic coating layer on the surface, the flexural rigidity is measured after excluding these coating layers from the microporous membrane.

[Shutdown temperature]

Two Ni foils (A and B) having a thickness of 10 μm were prepared. Ni foil A was masked with Teflon (registered trademark) tape, leaving a rectangular portion of 15 mm in length and 10 mm in width. A separator for the measurement sample was placed on the other Ni foil B, and both ends of the separator were fixed with Teflon (registered trademark) tape. The Ni foil B was immersed in an electrolytic solution of 1 mol/L lithium borofluoride solution (solvent: propylene carbonate / ethylene carbonate / γ-butyl lactone = mixed solvent with a volume ratio of 1/1/2). After the separator was impregnated with the electrolytic solution, the Ni foils (A and B) were held together, and both sides were pressed together with two glass plates by clips. The Ni foil electrodes thus produced were placed in an oven at 25 °C, and the temperature was elevated to 200 °C at 2 °C/min. The impedance change at this time was measured using an "AG-4311" electrical resistance measuring device (manufactured by Ando Electric Co., Ltd.) under the conditions of 1 V and 1 kHz. The temperature at which the impedance value reached 1000 Ω in this measurement was used as the shutdown temperature (°C).

[Withstand voltage]

MD 10 cm × TD 10 cm was cut out of a center point in the width direction of the polyolefin microporous membrane, interposed between aluminum plates having a diameter of 5 mm, and measured with a withstand voltage measuring machine (TOS9201) manufactured by Kikusui Electronics Corp. For the measurement conditions, DC voltage was started from the initial voltage of 0 V, voltage was applied at a voltage increase rate of 100 V/sec, and the voltage when the current flowed at 0.2 mA was used as the withstand voltage of the microporous membrane. A total of 25 points, MD 5 points × TD 5 points, were measured at intervals of 15 mm, and the average value thereof was used as the withstand voltage measurement value.

The withstand voltage per unit thickness was calculated as follows: Withstand voltage per unit membrane

thickness [V/$\mu$m] = withstand voltage [V]/membrane thickness [$\mu$m]

[Tensile strength (MPa) and tensile elongation (%)]

MD and TD samples (shape: 10 mm in width × 100 mm in length) were measured using a tensile tester, Autograph AG-A type (trademark), manufactured by Shimadzu Corporation in accordance with JIS K7127. The distance between chucks of the tensile tester was set to 50 mm, and cellophane (registered trademark) tape (manufactured by Nitto Denko Packaging System Co., Ltd., trade name: N.29) was adhered to one side on both end portions (25 mm each) of the sample. In order to prevent sample slipping during the test, a fluororubber having a thickness of 1 mm was attached to the inside of the chuck of the tensile tester.
The measurement was carried out under the conditions of a temperature of 23 ± 2 °C, a chuck pressure of 0.40 MPa, and a tensile rate of 100 mm/min.
The tensile strength (MPa) was determined by dividing the strength at the point of rupture of the polyolefin microporous membrane by the sample cross-sectional area before the test.
The tensile elongation (%) was determined by dividing the amount of elongation (mm) leading to rupture by the distance between chucks (50 mm) and multiplying by 100.

[Calculation of strain rate and strain rate ratio]

The stretching strain rate for each step and each direction was calculated as follows:

$$\text{Strain rate (\%/sec)} = (\text{stretch ratio} - 1) \times 100/(\text{stretch length (m)}/((\text{line speed before stretching (m/sec)} + \text{line speed after stretching (m/sec)})/2))$$

The stretch length refers to the distance that the membrane moves in the longitudinal direction (MD) from the start of stretching to the end of stretching in the steps (B) and (D).
For the calculation of the strain rate in the step (D), the strain rates of the stretching operation and the relaxation operation are each calculated.

[Evaluation of spring-back in roll]

An aluminum foil having a thickness of 10 $\mu$m as the positive electrode and a nickel foil having a thickness of 10 $\mu$m as the negative electrode were prepared, stacked in the order of positive electrode, polyolefin membrane, negative electrode, and polyolefin membrane, and wound to prepare a roll having a diameter of 20 mm. Thereafter, the roll was pressed with a pressing machine at 5 MPa and 30 °C for 10 sec, and the differences in thickness of the roll after 3 sec and 1 min were evaluated. Measurement was carried out three times, and the average value thereof was used as the spring-back value.

$$\text{Spring-back value} = 100 - (\text{thickness of roll after 3 sec/thickness of roll after 1 min} \times 100) \, [\%]$$

The spring-back value was evaluated by the following criteria:

(Evaluation criteria)

A: less than 2%
B: 2% to less than 5%
C: 5% to less than 10%
D: 10% to less than 15%
E: 15% or greater

[Evaluation of spring-back in zigzag fold]

The same positive electrode and negative electrode as the ones used in the evaluation of spring-back in a roll were prepared. The polyolefin membrane was folded back at intervals of 30 mm so that the upper and lower surfaces thereof alternate, and the positive electrode was repeatedly inserted from one side and the negative electrode from the other side to produce a stack having a thickness of 20 mm. The stack was pressed with a pressing machine at 5 MPa and 30 °C for 10 sec, and the differences in thickness of the stack after 3 sec and 1 min were evaluated. Measurement was carried out three times, and the average value thereof was used as the spring-back value.

$$\text{Spring-back value} = 100 - (\text{thickness of stack after 3 sec/thickness of stack after 1 min} \times 100) \, [\%]$$

The spring-back value was evaluated by the following criteria:

(Evaluation criteria)

A: less than 1%
B: 1 to less than 3%
C: 3 to less than 5%
D: 5 to less than 7%
E: 7% or greater

[Evaluation of impact test]

a. Fabrication of positive electrode
A lithium cobalt composite oxide $LiCoO_2$ as a positive electrode active material and graphite and acetylene black as conductive materials were dispersed in polyvinylidene fluoride (PVDF) and N-methyl pyrrolidone (NMP) as binders to prepare a slurry. The slurry was applied to an aluminum foil having a thickness of 15 $\mu$m as a positive electrode current collector with a die coater, dried at 130 °C for 3 min, and compression-molded with a roll press machine. The molded body thus obtained was slit to a width of 57.0 mm to obtain a positive electrode.
b. Fabrication of negative electrode
Artificial graphite as a negative electrode active material and an ammonium salt of carboxymethyl cellulose and styrene-butadiene copolymer latex as conductive materials were dispersed in purified water to prepare a slurry. The slurry was applied to a copper foil as a negative electrode current collector with a die coater, dried at 120 °C for 3 min, and compressed-molded with a roll press machine. The molded body thus obtained was slit to a width of 58.5 mm to obtain a negative electrode.
c. Preparation of non-aqueous electrolytic solution
$LiPF_6$ was dissolved as a solute in a mixed solvent of ethylene carbonate : dimethyl carbonate : ethyl methyl carbonate = 1:1:2 (volume ratio) so as to have a concentration of 1 mol/L to prepare a non-aqueous electrolytic solution.
d. Cell assembly
After winding the positive electrode, the porous membrane obtained in the Examples or Comparative Examples, and the negative electrode, a wound electrode body was prepared by a conventional method and pressed with a pressing machine so as to fit into an exterior can. The number of winding was adjusted according to the thickness of the polyolefin microporous membrane and the degree of spring-back. The outermost end portion of the wound electrode body thus obtained was fixed by attaching an insulating tape. A negative electrode lead was welded to a cell can and a positive electrode lead to a safety valve, and the wound electrode body was inserted into the interior of the cell can. Thereafter, 5 g of the non-aqueous electrolytic solution was charged in the cell can, and a lid was crimped to the cell can via a gasket to obtain a prismatic secondary cell having a width of 42.0 mm, a height of 63.0 mm, and a thickness of 10.5 mm. Charging was carried out for a total of 3 hours by a method in which the prismatic secondary cell was charged under an atmosphere of 25 °C at a current value of 0.2 C (0.2 times current of the one-hour rate (1 C) of a rated electrical capacity) until a cell voltage of 4.2 V was reached, and the current was then throttled to maintain 4.2 V. The cell was then discharged at a current value of 0.2 C to a cell voltage of 3.0 V.

[Impact test]

a. Impact test

FIG. 2 is a schematic diagram of the impact test.

In the impact test, a round bar 5 is placed on a prismatic cell sample 4 arranged on a test bench, such that the sample 4 and the round bar 5 ($\varphi$ = 15.8 mm) are substantially orthogonal to each other. From a height position of 61 cm from the round bar 5, an 18.2 kg weight 6 is dropped onto the top surface of the round bar 5, and the effect of the impact on the sample 4 is observed.

The procedure of the impact test in the Examples and Comparative Examples will be described below with reference to FIG. 2.

The secondary cell obtained above was charged with a constant current of 1 C in an environment of 25 °C until 4.2 V was reached, and then charged at a constant voltage of 4.2 V for a total of 3 hours.

Next, in an environment of 25 °C, the secondary cell was placed sideways on a flat surface, and a stainless steel round bar 5 having a diameter of 15.8 mm was arranged so as to cross the center portion of the secondary cell. The round bar 5 was arranged so that the long axis thereof was parallel to the longitudinal direction (MD) of the separator. An 18.2 kg weight 6 was dropped from a height of 61 cm so that an impact was applied at a right angle to the vertical axis direction of the secondary cell from the round bar 5 arranged at the center portion of the secondary cell. The surface temperature of the secondary cell was measured 3 sec and 3 min after the impact. Five cells were subjected to the test at a time and evaluated according to the following criteria. For the evaluation, A, B, and C were used as passing criteria. The surface temperature of a secondary cell was measured by a thermocouple (K-type seal type) at a position 1 cm from the bottom side of the exterior body of the secondary cell.

A: The surface temperature was 30 °C or lower in all the cells.
B: The surface temperature was 50 °C or lower in all the cells.
C: The surface temperature was 70 °C or lower in all the cells.
D: The surface temperature was 100 °C or lower in all the cells.
E: One or more cells reached a surface temperature of over 100 °C or ignited.

b. Output test (25 °C)

A prismatic secondary cell assembled and selected for evaluation in the same manner as in the impact test was charged with a constant current of 1 C in an environment of 25 °C until 4.2 V was reached, and then charged at a constant voltage of 4.2 V for a total of 3 hours. The 1 C discharge and 5 C discharge capacities until a discharge termination voltage of 3 V of the charged cell were measured in an isothermal state under an atmosphere of 25 °C, and the 5 C capacity/1 C capacity was used as the output characteristic value. The output characteristic value was evaluated according to the following criteria:

A: The output characteristic value was 0.95 or greater.
B: The output characteristic value was 0.90 to less than 0.95.
C: The output characteristic value was 0.85 to less than 0.90.
D: The output characteristic value was 0.80 to less than 0.85.
E: The output characteristic value was less than 0.80.

[Oven test]

Using a cell assembled and selected for evaluation in the same manner as in the impact test, the secondary cell obtained above was charged with a constant current of 1 C in an environment of 25 °C until 4.2 V was reached, and then charged at a constant voltage of 4.2 V for a total of 3 hours. The charged cell was heated from room temperature to a predetermined temperature at 5 °C/min and left at the predetermined temperature for 60 min. Thereafter, the ignition status of the cell was checked. Three cells were prepared, and the results were evaluated according to the following criteria:

A: At 136 °C, none of the cells ignited.
B: At 134 °C, none of the cells ignited.
C: At 132 °C, none of the cells ignited.
D: At 130 °C, none of the cells ignited.
E: At 130 °C, at least one of the cells ignited.

[Micro-short circuit test]

Using a cell assembled in the same manner as in the impact test and selected for evaluation, the cell was charged at constant current and constant voltage (CCCV) for 3 hours in an environment of 25 °C under the condition of a cut-off cell voltage of 4.0 V. The cell voltage was then adjusted to 4.0 V by a method of continuing 4.0 V constant voltage charging for 2 hours. The cell was allowed to stand for 1 hour in an isothermal bath set at 25 °C under a pressure of 10 kPa. A cell in which the voltage drops to 3.7 V or less was regarded as having a micro-short circuit. 10 cells were prepared, and the result of the 4.0 V micro-short circuit inspection test was evaluated in accordance with the following criteria, based on the number of micro-short-circuited cells.

A: The number of micro-short-circuited cells was 0.
B: The number of micro-short-circuited cells was 1.
C: The number of micro-short-circuited cells was 2 or 3.
D: The number of micro-short-circuited cells was 4 or 5.
E: The number of micro-short-circuited cells was 6 or greater.

[Example 1]

(A) A high-density polyethylene (PE5) having Mv of 700000 and polydispersity (Mw/Mn) of 7.9 in an amount of 45% by weight was dry-blended with a high-density polyethylene (PE2) having Mv of 250000 and polydispersity (Mw/Mn) of 7.2 in an amount of 45% by weight and a homopolypropylene (PP1) having Mv of 400000 and polydispersity (Mw/Mn) of 4.5 in an amount of 10% by weight using a tumbler blender to obtain a starting resin mixture. The starting resin mixture in an amount of 32% by weight, liquid paraffin in an amount of 68% by weight, and an antioxidant in an amount of 0.1% by weight were blended to obtain a polyolefin composition. Next, the polyolefin composition was charged in a twin-screw extruder, melted, and extruded through cast rolls with a distance of 900 $\mu$m therebetween to form a gel-like sheet, which was then cooled and solidified on cast rolls.
(B) The cooled and solidified sheet was stretched using a simultaneous biaxial stretcher at a preset temperature of 119 °C and a surface ratio of 64 times (a stretch ratio of 8 times in the longitudinal direction and a stretch ratio of 8 times in the width direction) to obtain a stretched sheet.
(C) Thereafter, the stretched sheet was immersed in methylene chloride to extract and remove the liquid paraffin, and dried to make the sheet porous.
(D) The porous product thus obtained was stretched to a stretch ratio of 1.8 times in the width direction at a temperature of 135 °C by a uniaxial stretcher, and then relaxed to a relaxation ratio of 1.6 times.
(E) After the heat setting step, fine stretching was carried out by roll stretching at a temperature of 70 °C and a fine stretching ratio of 3% to obtain a polyolefin microporous membrane having a thickness of 5.8 $\mu$m.

The polyolefin microporous membrane was subjected to the spring-back evaluation and the impact test according to the above methods. The production conditions and evaluation results of the polyolefin microporous membrane are shown in Table 1. The details of the polymer starting materials used are shown in Table 3.

[Examples 2 to 21 and Comparative Examples 1 to 21]

Except that the production conditions shown in Tables 1 and 2 were used, the polyolefin microporous membranes were obtained and evaluated by the same methods as in Example 1. The evaluation results are shown in Tables 1 and 2 below. However, the relaxation operation in the step (D) was not carried out in Comparative Example 18, and fine stretching in the MD in the step (E) was not carried out in Comparative Examples 3 and 13.

[Comparative Example 22]

Except that the cooled and solidified sheet was stretched using a roll stretcher at a preset temperature of 115 °C and a stretch ratio of 6 times in the longitudinal direction in the step (B), followed by stretching using a tenter at a preset temperature of 120 °C and a stretch ratio of 7 times in the width direction, and fine stretching in the MD in the step (E) was not carried out, the polyolefin microporous membrane was obtained and evaluated by the same methods as in Example 1. The evaluation results are shown in Tables 1 and 2 below.

[Comparative Example 23]

A polypropylene resin having a weight-average molecular weight of 590,000 and a melting point of 161 °C was charged in a single-screw extruder set at 200 °C via a feeder, and extruded from a T-die (200 °C) mounted on the extruder tip. Immediately thereafter, the melted resin was blown with cold air at 25 °C using an air knife, and wound with a cast roll set at 95 °C under the conditions of a draw ratio of 200 and a winding speed of 20 m/min to form a film. The film thus obtained was annealed for 1 hour in a hot-air circulation oven heated to 145 °C. Next, the annealed film was uniaxially stretched 1.2 times in the vertical direction at a temperature of 25 °C to obtain a stretched film. The stretched film was then uniaxially stretched 2.5 times in the vertical direction at a temperature of 140 °C and subjected to heat setting at 150 °C, and the resulting microporous film was wound up.

[Comparative Example 24]

100% by weight of polypropylene resin having a weight-average molecular weight of 700,000 and a melting point of 162 °C was melt-extruded at a resin temperature of 200 °C using a single-screw extruder, and discharged through nozzles having a nozzle diameter of 0.60 mm at a discharge rate of 0.6 g/min per hole to be spun. The fibers obtained by spinning were suctioned while cooled by air, and collected on a net surface moving at a line speed of 100 m/min. The fiber bundle collected on the net surface was nipped at a linear pressure of 40 N/mm and wound on a take-up roll to produce a nonwoven fabric. The rigidity of the nonwoven fabric thus obtained was low, and wrinkles formed when the roll and stack for spring-back evaluation and the prismatic cell were prepared. Thus, various evaluations could not be carried out.

[Table 1-1]

| | | | units | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Starting resin | PE (1) | | | PE5 | PE5 | PE8 | PE8 | PE8 | PE8 | PE8 | PE8 | PE8 | PE8 |
| | PE (2) | | | PE2 | PE2 | PE2 | PE2 | PE2 | PE2 | PE2 | PE2 | PE2 | PE2 |
| | PP | | | PP1 | PP1 | - | - | - | - | - | PP1 | PP1 | PP1 |
| Starting resin composition ratio | PE (1) | | wt% | 45 | 45 | 70 | 70 | 70 | 70 | 70 | 50 | 50 | 70 |
| | PE (2) | | wt% | 45 | 45 | 30 | 30 | 30 | 30 | 30 | 45 | 48 | 30 |
| | PP | | wt% | 10 | 10 | 0 | 0 | 0 | 0 | 0 | 5 | 2 | 0 |
| PC | | | % | 32 | 32 | 27 | 27 | 27 | 27 | 27 | 29 | 29 | 27 |
| C/C | | | μm | 900 | 900 | 1800 | 1600 | 1650 | 1650 | 1600 | 1560 | 1560 | 700 |
| Biaxial MD ratio | | | times | 8 | 7 | 7 | 7 | 7 | 6 | 8 | 7 | 7 | 8 |
| Biaxial TD ratio | | | times | 8 | 7 | 7 | 7 | 7 | 6 | 8 | 7 | 7 | 8 |
| Biaxial stretching temperature | | | °C | 119 | 117 | 122 | 126 | 123 | 117 | 123 | 125 | 125 | 120 |
| Heat setting stretch ratio | | | times | 1.80 | 2.00 | 2.00 | 1.95 | 1.85 | 2.20 | 2.00 | 2.00 | 2.00 | 2.00 |
| Heat setting relaxation ratio | | | times | 1.60 | 1.80 | 1.80 | 1.65 | 1.55 | 2.00 | 1.60 | 1.70 | 1.70 | 1.80 |
| Heat setting stretching strain rate | | | %/sec | 3.0 | 6.7 | 2.5 | 8.9 | 5.6 | 9.3 | 8.5 | 4.7 | 4.7 | 7.2 |
| Heat setting relaxation strain rate | | | %/sec | 0.8 | 1.3 | 4.1 | 4.3 | 2.3 | 5.2 | 6.3 | 1.5 | 1.5 | 3.9 |
| HS temperature | | | °C | 135 | 132 | 128 | 137 | 135 | 132 | 135 | 138 | 136 | 132 |
| Fine stretching ratio | | | % | 3 | 2 | 2 | 2 | 1 | 5 | 5 | 1 | 1 | 3 |
| Fine stretching temperature | | | °C | 70 | 85 | 85 | 85 | 80 | 80 | 80 | 80 | 90 | 90 |

[Table 1-2]

| | | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|---|
| Starting resin | PE (1) | | PE8 | PE8 | PE8 | PE8 | PE8 | PE8 | PE7 | PE8 | PE5 | PE5 | PE5 |
| | PE 2 | | PE2 | - | PE2 | PE2 | PE3 | PE1 | PE2 | - | PE2 | PE2 | PE2 |
| | PP | | - | PP1 | PP1 | PP1 | - | - | - | PP1 | PP1 | PP1 | - |
| Starting resin composition ratio | PE (1) | wt% | 70 | 93 | 70 | 93 | 55 | 70 | 45 | 80 | 45 | 50 | 50 |
| | PE (2) | wt% | 30 | 0 | 20 | 0 | 45 | 30 | 55 | - | 45 | 45 | 50 |
| | PP | wt% | 0 | 7 | 10 | 7 | 0 | 0 | 0 | 20 | 10 | 5 | 0 |
| PC | | % | 26 | 24 | 27 | 24 | 29 | 24 | 28 | 25 | 32 | 32 | 31 |
| C/C | | μm | 1630 | 1550 | 1580 | 1800 | 1500 | 1390 | 1540 | 1320 | 1490 | 2340 | 1780 |
| Biaxial MD ratio | | times | 7 | 8 | 6 | 10 | 7 | 9 | 9 | 9 | 7 | 7 | 7 |
| Biaxial TD ratio | | times | 7 | 8 | 7 | 10 | 7 | 9 | 7 | 9 | 7 | 8 | 8 |
| Biaxial stretching temperature | | °C | 122 | 117 | 125 | 118 | 119 | 120 | 123 | 119 | 122 | 125 | 125 |
| Heat setting stretch ratio | | times | 1.94 | 2.10 | 2.10 | 2.10 | 1.60 | 2.20 | 1.80 | 2.10 | 1.90 | 1.60 | 1.95 |
| Heat setting relaxation ratio | | times | 1.60 | 1.70 | 1.80 | 1.85 | 1.40 | 1.90 | 1.50 | 1.75 | 1.80 | 1.20 | 1.70 |
| Heat setting stretching strain rate | | %/sec | 7.2 | 5.6 | 8.6 | 6.7 | 5.5 | 8.3 | 5.5 | 8.6 | 10.7 | 4.4 | 9.3 |
| Heat setting relaxation strain rate | | %/sec | 2.4 | 3.8 | 3.5 | 1.6 | 4.5 | 5.8 | 8.4 | 6.9 | 1.3 | 9.6 | 5.6 |
| HS temperature | | °C | 133 | 133 | 129 | 135 | 135 | 132 | 134 | 133 | 131 | 132 | 132 |
| Fine stretching ratio | | % | 1 | 1 | 2 | 3 | 2 | 3 | 3 | 3 | 3 | 4 | 5 |
| Fine stretching temperature | | °C | 70 | 100 | 80 | 85 | 90 | 85 | 80 | 80 | 80 | 90 | 90 |

[Table 1-3]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Membrane thickness | μm | 5.8 | 6.5 | 10.2 | 10.1 | 11.9 | 10.3 | 9.2 | 9.7 | 9.7 | 3.1 |
| Basis weight | g/m² | 3.42 | 3.52 | 5.04 | 5.76 | 5.88 | 5.38 | 4.98 | 5.62 | 5.44 | 1.88 |
| Porosity | % | 38 | 43 | 48 | 40 | 48 | 45 | 43 | 39 | 41 | 36 |
| Air permeability | sec/100 cm³ | 120 | 90 | 74 | 139 | 101 | 76 | 121 | 154 | 154 | 72 |
| Puncture strength | gf | 360 | 310 | 408 | 538 | 585 | 634 | 534 | 536 | 552 | 238 |
| Basis weight-equivalent puncture strength | gf/(g/m²) | 105 | 88 | 81 | 93 | 100 | 118 | 107 | 95 | 102 | 126 |
| MD tensile strength | kgf/cm2 | 2010 | 1901 | 2118 | 2561 | 2851 | 2957 | 2505 | 2015 | 2254 | 1998 |
| TD tensile strength | kgf/cm2 | 2285 | 2156 | 2353 | 2438 | 2763 | 3020 | 2489 | 2122 | 2321 | 2028 |
| MD/TD tensile strength ratio | - | 0.88 | 0.88 | 0.90 | 1.05 | 1.03 | 0.98 | 1.01 | 0.95 | 0.97 | 0.99 |
| Shutdown temperature | °C | 143.4 | 139.8 | 144.2 | 145.0 | 149.5 | 147.5 | 146.5 | 143.6 | 143.8 | 143.1 |
| Melting point | °C | 136 | 135 | 136 | 136 | 136 | 135 | 135 | 136 | 136 | 135 |
| Pore size | μm | 0.052 | 0.046 | 0.053 | 0.065 | 0.046 | 0.052 | 0.056 | 0.060 | 0.059 | 0.063 |
| Flexural rigidity in longitudinal direction | $gf \times cm^2/cm$ | 0.0001 | 0.0001 | 0.0005 | 0.0008 | 0.0014 | 0.0010 | 0.0007 | 0.0008 | 0.0007 | 0.00002 |
| Flexural modulus | $(\mu gf \times cm^2/cm)/\mu m^3$ | 0.51 | 0.36 | 0.47 | 0.78 | 0.83 | 0.92 | 0.90 | 0.88 | 0.77 | 0.67 |
| Withstand voltage | kV | 0.957 | 0.975 | 1.367 | 1.650 | 2.132 | 1.872 | 1.672 | 1.470 | 1.622 | 0.520 |
| Membrane thickness-equivalent withstand voltage | kV/μm | 0.165 | 0.150 | 0.134 | 0.163 | 0.179 | 0.182 | 0.182 | 0.152 | 0.167 | 0.168 |
| Spring-back evaluation (roll) | | A | A | A | B | B | C | B | B | B | A |
| Spring-back evaluation (zigzag fold) | | A | A | A | A | B | B | B | B | A | A |
| Impact test | | A | A | C | A | A | A | A | B | A | A |
| Output characteristic | | A | A | A | A | A | A | A | B | B | A |

(continued)

|  | Example 1 | Example 2 | Example 3 | Example 4 | Example 5 | Example 6 | Example 7 | Example 8 | Example 9 | Example 10 |
|---|---|---|---|---|---|---|---|---|---|---|
| Oven test | C | A | C | C | D | D | C | C | C | C |
| Micro-short circuit test | A | B | C | A | A | A | A | A | A | B |

[Table 1-4]

| | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Membrane thickness | μm | 9.2 | 9.2 | 10.5 | 8.5 | 8.9 | 7.3 | 9.1 | 6.2 | 12 | 16.5 | 11 |
| Basis weight | g/m² | 5.54 | 6.29 | 5.89 | 5.41 | 6.17 | 4.51 | 5.88 | 4.06 | 6.33 | 9.64 | 6.58 |
| Porosity | % | 37 | 28 | 41 | 33 | 27 | 35 | 32 | 31 | 45 | 39 | 37 |
| Air permeability | sec/100 cm³ | 150 | 244 | 145 | 248 | 254 | 135 | 135 | 181 | 154 | 141 | 165 |
| Puncture strength | gf | 456 | 830 | 499 | 740 | 535 | 447 | 520 | 455 | 488 | 690 | 503 |
| Basis weight-equivalent puncture strength | gf/(g/m²) | 82 | 132 | 85 | 137 | 87 | 99 | 88 | 112 | 77 | 72 | 76 |
| MD tensile strength | kgf/cm² | 2462 | 3540 | 2274 | 2964 | 2197 | 2341 | 2715 | 2576 | 1875 | 2265 | 1984 |
| TD tensile strength | kgf/cm² | 2446 | 3279 | 1923 | 2837 | 2102 | 2198 | 2150 | 2286 | 2044 | 2581 | 2403 |
| MD/TD tensile strength ratio | - | 1.01 | 1.08 | 1.18 | 1.04 | 1.05 | 1.07 | 1.26 | 1.13 | 0.92 | 0.88 | 0.83 |
| Shutdown temperature | °C | 143.5 | 149.2 | 147.8 | 148.9 | 139.5 | 147.5 | 142.3 | 150.8 | 141.1 | 141.3 | 139.6 |
| Melting point | °C | 136 | 135 | 135 | 135 | 136 | 136 | 136 | 135 | 135 | 135 | 135 |
| Pore size | μm | 0.070 | 0.047 | 0.055 | 0.045 | 0.039 | 0.052 | 0.071 | 0.059 | 0.076 | 0.073 | 0.078 |
| Flexural rigidity in longitudinal direction | gf × cm²/cm | 0.00102 | 0.0008 | 0.0011 | 0.00090 | 0.00075 | 0.00045 | 0.0011 | 0.00032 | 0.002 | 0.0059 | 0.00181 |
| Flexural modulus | (μgf × cm²/cm)/μm³ | 1.31 | 1.03 | 0.95 | 1.47 | 1.06 | 1.16 | 1.46 | 1.34 | 1.16 | 1.31 | 1.36 |
| Withstand voltage | kV | 1.411 | 1.751 | 1.476 | 1.685 | 2.086 | 1.232 | 1.239 | 1.189 | 1.538 | 2.204 | 1.060 |

EP 4 043 516 A1

(continued)

| | | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|
| Membrane thickness-equivalent withstand voltage | kV/μm | 0.153 | 0.190 | 0.141 | 0.198 | 0.234 | 0.169 | 0.136 | 0.192 | 0.128 | 0.134 | 0.096 |
| Spring-back evaluation (roll) | | D | C | C | D | C | D | D | D | D | D | D |
| Spring-back evaluation (zigzag fold) | | C | C | B | D | C | C | D | C | C | C | D |
| Impact test | | C | A | C | A | B | A | B | A | D | D | D |
| Output characteristic | | A | D | A | D | E | A | A | C | B | A | B |
| Oven test | | C | D | D | D | A | D | B | E | B | B | A |
| Micro-short circuit test | | A | A | B | A | A | A | C | A | D | B | E |

26

[Table 2-1]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| Starting resin | PE (1) | | PE5 | PE5 | PE5 | PE8 | PE5 | PE5 | PE5 | PE5 | PE5 | PE4 | PE5 | PE8 |
| | PE (2) | | PE2 | PE2 | PE2 | PE2 | PE2 | PE2 | PE2 | PE2 | PE2 | PE2 | PE2 | PE2 |
| | PP | | PP1 | PP1 | PP1 | - | PP1 | PP1 | - | PP1 | - | PP1 | PP1 | PP1 |
| Starting resin composition ratio | PE (1) | wt% | 45 | 45 | 45 | 70 | 45 | 45 | 30 | 45 | 75 | 60 | 40 | 80 |
| | PE (2) | wt% | 45 | 45 | 45 | 30 | 45 | 30 | 70 | 45 | 25 | 10 | 45 | 10 |
| | PP | wt% | 10 | 10 | 10 | 0 | 10 | 25 | 0 | 10 | 0 | 30 | 15 | 10 |
| PC | | % | 32 | 32 | 32 | 27 | 32 | 34 | 32 | 35 | 25 | 35 | 32 | 24 |
| C/C | | μm | 2020 | 1780 | 1360 | 1000 | 820 | 820 | 1400 | 2280 | 1760 | 1320 | 920 | 860 |
| Biaxial MD ratio | | times | 5 | 5 | 7 | 5 | 7 | 7 | 7 | 6 | 7 | 7 | 3 | 11 |
| Biaxial TD ratio | | times | 5 | 5 | 7 | 5 | 7 | 7 | 6.5 | 6 | 7 | 4 | 3 | 11 |
| Biaxial stretching temperature | | °C | 116 | 120 | 125 | 114 | 122 | 120 | 118 | 123 | 121 | 124 | 124 | 120 |
| Heat setting stretch ratio | | times | 3 | 2.5 | 1.7 | 2.5 | 1.75 | 1.75 | 1.7 | 1.3 | 1.9 | 2.2 | 1.8 | 1.9 |
| Heat setting relaxation ratio | | times | 2.5 | 2.3 | 1.1 | 2.2 | 1.5 | 1.5 | 1.55 | 1.19 | 1.6 | 1.95 | 1.55 | 1.6 |
| Heat setting stretching strain rate | | %/sec | 13.2 | 12.5 | 3.5 | 12.0 | 14.2 | 14.2 | 22 | 3.8 | 9.0 | 6.6 | 5.6 | 8.0 |
| Heat setting relaxation strain rate | | %/sec | 6.5 | 2.1 | 14.5 | 7.1 | 13.7 | 13.7 | 18 | 1.2 | 7.0 | 2.8 | 6.7 | 5.2 |
| HS temperature | | °C | 129 | 128 | 128 | 129 | 130 | 133 | 130 | 128 | 133 | 132 | 132 | 133 |
| Fine stretching ratio | | % | -2 | -2 | - | 7 | -2 | -2 | -1 | 1 | 1 | 2 | 2 | 2 |
| Fine stretching temperature | | °C | 80 | 80 | - | 85 | 85 | 90 | 90 | 110 | 60 | 85 | 85 | 85 |

EP 4 043 516 A1

[Table 2-2]

| | | | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 | Comparative Example 23 | Comparative Example 24 |
|---|---|---|---|---|---|---|---|---|---|---|---|---|---|---|
| Starting resin | | PE (1) | PE5 | PE8 | PE8 | PE6 | PE8 | PE8 | PE9 | PE6 | PE4 | PE5 | - | - |
| | | PE (2) | PE2 | PE2 | PE2 | PE2 | PE2 | PE2 | PE1 | PE2 | PE2 | PE2 | - | - |
| | | PP | PP1 | PP1 | - | - | PP1 | PP1 | - | - | - | PP1 | - | - |
| Starting resin composition ratio | PE (1) | wt% | 60 | 80 | 70 | 80 | 50 | 60 | 70 | 75 | 55 | 45 | - | - |
| | PE (2) | wt% | 30 | 15 | 30 | 20 | 40 | 35 | 30 | 25 | 45 | 45 | - | - |
| | PP | wt% | 10 | 5 | 0 | 0 | 10 | 5 | 0 | 0 | 0 | 10 | - | - |
| PC | | % | 32 | 24 | 26 | 25 | 29 | 28 | 26 | 26 | 31 | 32 | - | - |
| C/C | | μm | 1520 | 1580 | 1050 | 1100 | 1530 | 1230 | 1280 | 1510 | 1780 | 900 | - | - |
| Biaxial MD ratio | | times | 7 | 10 | 9 | 6 | 7 | 7 | 7 | 7 | 7 | 6 | - | - |
| Biaxial TD ratio | | times | 7 | 10 | 7 | 6 | 7 | 7 | 7 | 8 | 8 | 7 | - | - |
| Biaxial stretching temperature | | °C | 124 | 122 | 119 | 120 | 123 | 120 | 122 | 124 | 125 | 119 | - | - |
| Heat setting stretch ratio | | times | 1.9 | 1.9 | 1.96 | 1.2 | 2.5 | 1.3 | 1.5 | 1.7 | 1.95 | 1.8 | - | - |
| Heat setting relaxation ratio | | times | 1.6 | 1.3 | 1.6 | 1.05 | 1.4 | - | 1.1 | 1.6 | 1.7 | 1.6 | - | - |
| Heat setting stretching strain rate | | %/sec | 6.8 | 8.0 | 12.0 | 1.8 | 9.0 | 2.1 | 3.2 | 6.6 | 9.3 | 3 | - | - |
| Heat setting relaxation strain rate | | %/sec | 7.2 | 4.8 | 3.5 | 2.2 | 11.2 | - | 2.5 | 2 | 5.6 | 0.8 | - | - |
| HS temperature | | °C | 132 | 132 | 131 | 134 | 134 | 132 | 136 | 132 | 132 | 135 | - | - |
| Fine stretching ratio | | % | - | 6 | 2 | 2 | 3 | 1 | 3 | 2 | 4 | - | - | - |
| Fine stretching temperature | | °C | - | 85 | 85 | 85 | 85 | 90 | 100 | 100 | 100 | - | - | - |

[Table 2-3]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Membrane thickness | μm | 17.4 | 14.7 | 18 | 4.7 | 6.0 | 6.0 | 10.0 | 12.0 | 5.8 | 10.2 | 5.8 | 4.5 |
| Basis weight | g/m² | 9.42 | 7.40 | 9.06 | 2.77 | 3.36 | 3.53 | 5.51 | 6.38 | 3.58 | 5.04 | 3.36 | 2.91 |
| Porosity | % | 43 | 47 | 47 | 38 | 41 | 38 | 42 | 44 | 35 | 48 | 39 | 32 |
| Air permeability | sec/100 3 cm | 235 | 224 | 150 | 190 | 100 | 100 | 126 | 157 | 151 | 151 | 98 | 219 |
| Puncture strength | gf | 867 | 371 | 340 | 329 | 226 | 226 | 479 | 390 | 410 | 349 | 152 | 320 |
| Basis weight-equivalent puncture strength | gf/(g/m²) | 92 | 50 | 38 | 119 | 67 | 67 | 87 | 61 | 114 | 69 | 45 | 110 |
| MD tensile strength | kgf/cm² | 1996 | 1935 | 1255 | 3121 | 1037 | 980 | 1550 | 1418 | 2135 | 2203 | 838 | 2040 |
| TD tensile strength | kgf/cm² | 2603 | 603 | 542 | 2984 | 930 | 836 | 1630 | 1096 | 1711 | 1312 | 953 | 2109 |
| MD/TD tensile strength ratio | - | 0.77 | 3.21 | 2.32 | 1.05 | 1.12 | 1.17 | 0.95 | 1.29 | 1.25 | 1.68 | 0.88 | 0.97 |
| Shutdown temperature | °C | 144.6 | 141.9 | 141.3 | 146.2 | 141.5 | 142.6 | 140.6 | 140.9 | 147.3 | 153.1 | 139.7 | 150.2 |
| Melting point | °C | 135 | 135 | 135 | 135 | 135 | 135 | 136 | 135 | 136 | 135 | 135 | 136 |
| Pore size | μm | 0.058 | 0.048 | 0.073 | 0.044 | 0.053 | 0.055 | 0.058 | 0.067 | 0.084 | 0.080 | 0.066 | 0.057 |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|
| Flexural rigidity in longitudinal direction | gf $\times$ cm$^2$/cm | 0.006 | 0.0063 | 0.0065 | 0.0005 | 0.0003 | 0.0004 | 0.0036 | 0.0041 | 0.00045 | 0.00201 | 0.0003 | 0.00017 |
| Flexural modulus | ($\mu$gf $\times$ cm$^2$/cm) /$\mu$ 3 m | 1.14 | 1.98 | 1.11 | 4.82 | 1.39 | 1.85 | 3.60 | 2.37 | 2.31 | 1.89 | 1.54 | 1.87 |
| Withstand voltage | kV | 2.680 | 2.117 | 1.800 | 0.766 | 0.511 | 0.447 | 2.680 | 2.540 | 0.573 | 0.925 | 0.699 | 0.785 |
| Membrane thickness-equivalent withstand voltage | kV/$\mu$m | 0.154 | 0.144 | 0.100 | 0.163 | 0.085 | 0.075 | 0.268 | 0.212 | 0.099 | 0.091 | 0.121 | 0.174 |
| Spring-back evaluation (roll) | | E | E | E | E | D | E | E | E | E | E | E | E |
| Spring-back evaluation (zigzag fold) | | E | E | E | E | D | E | E | E | E | E | E | E |
| Impact test | | A | B | E | A | E | E | c | E | A | E | E | A |
| Output characteristic | | D | D | A | C | A | A | A | B | B | B | A | D |
| Oven test | | C | B | B | C | B | B | B | B | D | E | A | E |
| Micro-short circuit test | | A | B | C | A | E | E | A | A | E | D | D | A |

[Table 2-4]

| | | Comp. Ex. 13 | Comp. Ex. 14 | Comp. Ex. 15 | Comp. Ex. 16 | Comp. Ex. 17 | Comp. Ex. 18 | Comp. Ex. 19 | Comp. Ex. 20 | Comp. Ex. 21 | Comp. Ex. 22 | Comp. Ex. 23 | Comp. Ex. 24 |
|---|---|---|---|---|---|---|---|---|---|---|---|---|---|
| Membrane thickness | μm | 13.2 | 9.7 | 4.4 | 9.2 | 10.5 | 6.9 | 7.7 | 9.8 | 11 | 12 | 15.0 | 54.0 |
| Basis weight | g/m$^2$ | 7.65 | 6.17 | 2.88 | 5.77 | 6.58 | 4.39 | 5.05 | 5.77 | 6.58 | 6.84 | 7.1 | 13.0 |
| Porosity | % | 39 | 33 | 31 | 34 | 34 | 33 | 31 | 38 | 37 | 40 | 50 | 74.6 |
| Air permeability | sec/100 3 cm | 221 | 304 | 168 | 290 | 235 | 237 | 251 | 157 | 175 | 200 | 190 | 25 |
| Puncture strength | gf | 642 | 610 | 253 | 415 | 580 | 495 | 449 | 482 | 503 | 606 | 290 | 320 |
| Basis weight-equivalent puncture strength | gf/(g/m$^2$) | 84 | 99 | 88 | 72 | 88 | 113 | 89 | 84 | 76 | 89 | 41 | 25 |
| MD tensile strength | kgf/cm$^2$ | 2743 | 2591 | 2299 | 2120 | 2640 | 2314 | 2210 | 2030 | 2104 | 1965 | 1600 | 1570 |
| TD tensile strength | kgf/cm$^2$ | 2462 | 2903 | 1874 | 1946 | 2335 | 2591 | 2147 | 2319 | 2301 | 1855 | 120 | 450 |
| MD/TD tensile strength ratio | - | 1.11 | 0.89 | 1.23 | 1.09 | 1.13 | 0.89 | 1.03 | 0.88 | 0.91 | 1.06 | 13.3 | 3.49 |
| Shutdown temperature | °C | 145.7 | 149.1 | 141.2 | 145.1 | 147.8 | 145.6 | 146.3 | 145.7 | 139.6 | 148.3 | 166.0 | 162.0 |
| Melting point | °C | 135 | 136 | 136 | 135 | 136 | 135 | 135 | 135 | 135 | 135 | 161 | 160 |
| Pore size | μm | 0.069 | 0.037 | 0.071 | 0.029 | 0.049 | 0.041 | 0.039 | 0.061 | 0.064 | 0.058 | 0.045 | 0.095 |
| Flexural rigidity in longitudinal direction | gf × cm$^2$/cm | 0.0039 | 0.00185 | 0.0002 | 0.0017 | 0.0026 | 0.00063 | 0.001 | 0.00151 | 0.00293 | 0.00559 | 0.0065 | 0.015 |
| Flexural modulus | (μgf × cm$^2$/cm)/ 3 μm | 1.70 | 2.03 | 2.35 | 2.18 | 2.25 | 1.92 | 2.19 | 1.60 | 2.20 | 3.23 | 1.93 | 0.10 |
| Withstand voltage | kV | 1.412 | 1.545 | 0.577 | 0.982 | 1.980 | 1.275 | 1.795 | 1.403 | 1.463 | 1.576 | 1.020 | 2.310 |

EP 4 043 516 A1

31

| | | Comp. Ex. 13 | Comp. Ex. 14 | Comp. Ex. 15 | Comp. Ex. 16 | Comp. Ex. 17 | Comp. Ex. 18 | Comp. Ex. 19 | Comp. Ex. 20 | Comp. Ex. 21 | Comp. Ex. 22 | Comp. Ex. 23 | Comp. Ex. 24 |
|---|---|---|---|---|---|---|---|---|---|---|---|---|---|
| Membrane thickness-equivalentwithstand voltage | kV/$\mu$m | 0.107 | 0.159 | 0.131 | 0.107 | 0.189 | 0.185 | 0.233 | 0.143 | 0.133 | 0.131 | 0.068 | 0.043 |
| Spring-back evaluation (roll) | | E | E | E | E | E | E | E | E | E | E | E | - |
| Spring-back evaluation (zigzag fold) | | E | E | E | E | E | E | E | E | E | E | E | |
| Impact test | | C | A | B | D | B | A | B | C | D | B | E | |
| Output characteristic | | D | E | B | E | D | D | E | B | B | C | C | |
| Oven test | | C | D | B | C | D | C | C | C | A | D | E | |
| Micro-short circuit test | | C | A | C | D | A | A | A | B | C | C | E | |

Description of abbreviations in Tables 1 and 2

PC: proportion of starting resin mixture in polyolefin composition [%]
C/C: gap between cast rolls ($\mu$m)
HS: heat setting step

[Table 3]

| | PE1 | PE2 | PE3 | PE4 | PE5 | PE6 | PE7 | PE8 | PE9 | PP1 |
|---|---|---|---|---|---|---|---|---|---|---|
| Viscosity-average molecular weight (Mv) | 250,000 | 250,000 | 250,000 | 700,000 | 700,000 | 700,000 | 900,000 | 900,000 | 900,000 | 400,000 |
| Polydispersity (Mw/Mn) | 3.5 | 7.2 | 13.2 | 3.3 | 7.9 | 12.5 | 3.8 | 7.5 | 13.8 | 4.5 |

REFERENCE SIGNS LIST

P    fixed point
Q    movable point
1    membrane sample
2    fixed chuck
3    movable chuck
4    prismatic cell sample
5    round bar
6    weight

**Claims**

1.  A polyolefin microporous membrane having a membrane thickness of 1.0 $\mu$m to 17.0 $\mu$m; a flexural modulus, which is a value obtained by dividing a flexural rigidity (gf $\times$ cm$^2$/cm) in a longitudinal direction (MD) by the cube of the membrane thickness ($\mu$m), of 0.3 ($\mu$gf $\times$ cm$^2$/cm)/$\mu$m$^3$ to 1.5 ($\mu$gf $\times$ cm$^2$/cm)/cm$^3$; and a basis weight-equivalent puncture strength of 70 gf/(g/m$^2$) to 160 gf/(g/m$^2$).

2.  The polyolefin microporous membrane according to claim 1, wherein the basis weight-equivalent puncture strength is 80 gf/(g/m$^2$) to 140 gf/(g/m$^2$).

3.  The polyolefin microporous membrane according to claim 1 or 2, which has a puncture strength of 300 gf to 950 gf.

4.  The polyolefin microporous membrane according to any one of claims 1 to 3, which has a tensile strength of 1000 kgf/cm$^2$ or greater in each of the MD and TD.

5.  The polyolefin microporous membrane according to any one of claims 1 to 4, wherein a ratio (MD/TD tensile strength ratio) of the tensile strength in the MD to the tensile strength in the TD is 0.80 to 1.20.

6.  The polyolefin microporous membrane according to any one of claims 1 to 5, which has a shutdown temperature of 125 °C to 150 °C.

7.  The polyolefin microporous membrane according to any one of claims 1 to 6, which has an air permeability of 30 sec/100 cm$^3$ to 250 sec/100 cm$^3$.

8.  The polyolefin microporous membrane according to any one of claims 1 to 7, which has a withstand voltage per unit membrane thickness of 0.130 kV/$\mu$m or greater.

9.  The polyolefin microporous membrane according to any one of claims 1 to 8, which has an average pore size of 0.010 $\mu$m to 0.080 $\mu$m.

10. The polyolefin microporous membrane according to any one of claims 1 to 9, wherein a proportion of polyethylene is 50% by weight to 100% by weight and a proportion of polypropylene is 0% by weight to 20% by weight.

# FIG. 1

MD

3

Q

1

P

2

CONNECTED TO TORQUE METER

# FIG. 2

6

5

4

## INTERNATIONAL SEARCH REPORT

International application No.

PCT/JP2020/038210

### A. CLASSIFICATION OF SUBJECT MATTER
C08J 9/26(2006.01)i
FI: C08J9/26 102; C08J9/26 CES

According to International Patent Classification (IPC) or to both national classification and IPC

### B. FIELDS SEARCHED

Minimum documentation searched (classification system followed by classification symbols)
C08J9/00-9/42

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-102203 A (TORAY INDUSTRIES, INC.) 02 June 2016 (2016-06-02) entire text | 1-10 |
| A | JP 2017-27945 A (ASAHI KASEI CORPORATION) 02 February 2017 (2017-02-02) entire text | 1-10 |
| A | JP 2016-102201 A (TORAY INDUSTRIES, INC.) 02 June 2016 (2016-06-02) entire text | 1-10 |
| A | JP 2019-157060 A (TORAY INDUSTRIES, INC.) 19 September 2019 (2019-09-19) entire text | 1-10 |
| A | WO 2019/107119 A1 (ASAHI KASEI CORPORATION) 06 June 2019 (2019-06-06) entire text | 1-10 |
| A | WO 2019/045077 A1 (ASAHI KASEI CORPORATION) 07 March 2019 (2019-03-07) entire text | 1-10 |
| A | JP 11-279324 A (ASAHI KASEI INDUSTRY CO., LTD.) 12 October 1999 (1999-10-12) entire text | 1-10 |

☒ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 December 2020 (10.12.2020) | 22 December 2020 (22.12.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/038210

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2003-105122 A (TONEN CHEMICAL CORPORATION) 09 April 2003 (2003-04-09) entire text | 1-10 |
| A | JP 2010-538097 A (TONEN CHEMICAL CORPORATION) 09 December 2010 (2010-12-09) entire text | 1-10 |

Form PCT/ISA/210 (continuation of second sheet) (January 2015)

INTERNATIONAL SEARCH REPORT
Information on patent family members

International application No.

PCT/JP2020/038210

| Patent Documents referred in the Report | Publication Date | Patent Family | Publication Date |
|---|---|---|---|
| JP 2016-102203 A | 02 Jun. 2016 | (Family: none) | |
| JP 2017-27945 A | 02 Feb. 2017 | (Family: none) | |
| JP 2016-102201 A | 02 Jun. 2016 | (Family: none) | |
| JP 2019-157060 A | 19 Sep. 2019 | (Family: none) | |
| WO 2019/107119 A1 | 06 Jun. 2019 | US 2020/0067055 A1 entire text CN 110352514 A KR 10-2019-0112064 A | |
| WO 2019/045077 A1 | 07 Mar. 2019 | US 2020/0144577 A1 entire text KR 10-2020-0007018 A CN 110785461 A | |
| JP 11-279324 A | 12 Oct. 1999 | (Family: none) | |
| JP 2003-105122 A | 09 Apr. 2003 | (Family: none) | |
| JP 2010-538097 A | 09 Dec. 2010 | US 2010/0209745 A1 entire text CN 101796108 A KR 10-2010-0082830 A | |

Form PCT/ISA/210 (patent family annex) (January 2015)

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016191006 A
- WO 2018179810 A
- WO 2019045077 A
- JP 2015208893 A
- WO 2019074122 A